# EUROPEAN PATENT APPLICATION

(11) **EP 4 535 118 A1**
(43) Date of publication of application: **09.04.2025**
(21) Application number: 24200586.6
(22) Date of filing: 16.09.2024
(51) Int. Cl.: G05D 1/224, G05D 1/698, G05D 1/227, G05D 105/45, G05D 107/70, G05D 109/10

(54) **CONTROL DEVICE AND CONTROL METHOD**

(30) Priority: 05.10.2023 JP 2023173393
(71) Applicant: TOYOTA JIDOSHA KABUSHIKI KAISHA, Aichi-ken, 471-8571 (JP)
(72) Inventor: IWAHORI, Kento, Toyota-shi, 471-8571 (JP); YOKOYAMA, Daiki, Toyota-shi, 471-8571 (JP); YASUYAMA, Shogo, Toyota-shi, 471-8571 (JP); SAITO, Yasuhiro, Kariya-shi, 448-0002 (JP)
(74) Representative: J A Kemp LLP

(57) **Abstract**

A control device (120) includes a processor (11). The processor (11) is configured to: specify, in a case where an abnormal state occurs in a plurality of mobile bodies (20) being performing automated driving autonomously or through remote control, at least one mobile body (20) to be preferentially handled as a target mobile body, from among the plurality of mobile bodies (20), based on a state of the plurality of mobile bodies (20); and perform control of taking necessary measures on the target mobile body.

## Description

### BACKGROUND OF THE INVENTION

### 1. Field of the Invention

The present disclosure relates to a control device and a control method.

### 2. Description of Related Art

Japanese Unexamined Patent Application Publication (Translation of PCT Application) No. 2017-538619 (JP 2017-538619 A) describes a vehicle that is autonomously driven through remote control.

### SUMMARY OF THE INVENTION

When a plurality of vehicles traveling through automated driving is stopped because of a certain failure, it is not clear how the stopped vehicles are to be handled in what order of priority. There has been a desire for a technique of determining how the stopped vehicles are to be handled in what order of priority.

The present disclosure can be implemented as the following aspects.
(1) A first aspect of the present disclosure provides a control device. The control device includes a processor. The processor is configured to: specify, in a case where an abnormal state occurs in a plurality of mobile bodies that are performing automated driving autonomously or through remote control, at least one mobile body to be preferentially handled as a target mobile body, from among the plurality of mobile bodies, based on a state of the plurality of mobile bodies; and perform control of taking necessary measures on the target mobile body.
   With the control device according to this aspect, it is possible to easily determine a target to be preferentially handled, among a plurality of mobile bodies in an abnormal state, and take necessary measures on the specified mobile body. Hence, it is easy to determine how the mobile bodies that have been in an abnormal state are to be handled in what order of priority.
(2) In the control device according to the above aspect, the automated driving performed through the remote control may include automated driving in which the plurality of mobile bodies travels by receiving a travel condition generated by the control device, not based on remote operations by an operator located at a remote location; and the processor may be configured to specify at least one mobile body that preferentially performs the automated driving autonomously or through the remote control as the target mobile body, from among the plurality of mobile bodies detected as being in the abnormal state, and perform control to cause the target mobile body to perform the automated driving autonomously or through the remote control.
   With the control device according to this aspect, it is possible to immediately resume automated driving performed autonomously or through remote control for mobile bodies specified as targets to be preferentially handled.
(3) In the control device according to the above aspect, the target mobile body may include the mobile body, for which a distance from a present position to a location at which a downstream process is performed is equal to or less than a distance determined in advance.
   A mobile body can reach the location at which the downstream process is performed earlier when the mobile body positioned closer to the location at which the downstream process is performed than the other mobile bodies is preferentially moved, among the mobile bodies in an abnormal state, than when the mobile body positioned farther from the location at which the downstream process is performed than the other mobile bodies is preferentially moved. With the control device according to the above aspect, the occurrence of an idle time in the downstream process is reduced.
(4) In the control device according to the above aspect, the target mobile body may include the mobile body, for which a distance from a present position to a location at which an upstream process is performed is equal to or less than a distance determined in advance.
   When an abnormal state occurs in the mobile body, either while the upstream process is being performed or within a range determined in advance from the location at which the upstream process is performed immediately after the upstream process is performed, other mobile bodies cannot enter the location at which the upstream process is performed, stagnating the flow of the upstream process, for example. With the control device according to the above aspect, the stagnation of the flow of the upstream process is reduced in a case where an abnormal state occurs in the mobile body.
(5) In the control device according to the above aspect, the target mobile body may include the mobile body, for which a time since a present time until a set expected shipping datetime is equal to or less than a time determined in advance.
   With the control device according to this aspect, the occurrence of a delay in shipping is suppressed.
(6) In the control device according to the above aspect, the target mobile body may include the mobile body, for which no stationary object is present on an expected travel route.
   With the control device according to this aspect, it is easy to autonomously drive the mobile body through remote control when no object is present on the expected travel route.
(7) In the control device according to the above aspect, the target mobile body may include the mobile body of a model planned to be preferentially produced.
   With the control device according to this aspect, it is easy to specify the mobile body to be preferentially handled. In addition, the occurrence of a delay in the production plan is suppressed.
(8) In the control device according to the above aspect, the target mobile body may include the mobile body presently positioned outdoors.
   With the control device according to this aspect, it is possible to avoid the mobile body in an abnormal state being left outdoors for a long time.
(9) In the control device according to the above aspect, the target mobile body may include the mobile body presently positioned indoors.
   With the control device according to this aspect, the stagnation of the flow of movement of the mobile bodies is suppressed in a limited indoor space.
(10) In the control device according to the above aspect, the processor may be configured to: perform control of starting the automated driving performed through the remote control for the target mobile body in a case where the target mobile body is a mobile body brought into the abnormal state while performing the autonomous driving; and perform control of starting the autonomous driving for the target mobile body in a case where the target mobile body is a mobile body brought into the abnormal state while performing the automated driving through the remote control.
   With the control device according to this aspect, switching is made to a driving mode different from the driving mode set in a case where an abnormal state occurs. Consequently, it is possible to immediately start automated driving of the mobile body performed autonomously or through remote control.
(11) In the control device according to the above aspect, the automated driving performed through the remote control may include automated driving in which the mobile body travels based on remote operations performed by an operator using an operator input device provided at a different location from the mobile body, and automated driving in which the plurality of mobile bodies travels by receiving a travel condition generated by the control device, not based on the remote operations by the operator; and the processor may be configured to specify at least one mobile body for which the automated driving based on the remote operations by the operator is to be preferentially started as the target mobile body, from among the plurality of mobile bodies detected as being in the abnormal state, and perform control of starting the automated driving based on the remote operations by the operator for the target mobile body.
   With the control device according to this aspect, it is possible to immediately start automated driving based on remote operations by an operator for mobile bodies specified as targets to be preferentially handled.
(12) In the control device according to the above aspect, the target mobile body may include the mobile body, for which a distance from a present position to a location at which a downstream process is performed is equal to or less than a distance determined in advance.
   A mobile body can reach the location at which the downstream process is performed earlier when the mobile body positioned closer to the location at which the downstream process is performed than the other mobile bodies is preferentially moved, among the mobile bodies in an abnormal state, than when the mobile body positioned farther from the location at which the downstream process is performed than the other mobile bodies is preferentially moved. With the control device according to this aspect, the occurrence of an idle time in the downstream process can be reduced.
(13) In the control device according to the above aspect, the target mobile body may include the mobile body, for which a distance from a present position to a location at which an upstream process is performed is equal to or less than a distance determined in advance.
   When an abnormal state occurs in the mobile body, either while the upstream process is being performed or within a range determined in advance from the location at which the upstream process is performed immediately after the upstream process is performed, other mobile bodies cannot enter the location at which the upstream process is performed, stagnating the flow of the upstream process, for example. With the control device according to this aspect, the stagnation of the flow of the upstream process can be reduced when an abnormal state occurs in the mobile body.
(14) In the control device according to the above aspect, the target mobile body may include the mobile body, for which a time since a present time until a set expected shipping datetime is equal to or less than a time determined in advance.
   With the control device according to this aspect, the occurrence of a delay in shipping can be suppressed.
(15) In the control device according to the above aspect, the target mobile body may include the mobile body capable of providing visual information to be used for the operator located at a remote location to remotely operate the mobile body.
   With the control device according to this aspect, visual information necessary for remote operations can be provided to the operator, and thus the operator can smoothly drive the mobile body through remote control.
(16) In the control device according to the above aspect, the target mobile body may include the mobile body located on a path along which the operator located at a remote location has caused the mobile body to travel based on the remote operations. With the control device according to this aspect, the specified mobile body is located on a path along which the operator has caused the mobile body to travel based on remote operations, and therefore the operator can smoothly drive the mobile body through remote control.
(17) In the control device according to the above aspect, the target mobile body may include the mobile body with no object that hinders travel of the mobile body present around the mobile body in a case where travel of the mobile body based on the remote operations by the operator located at a remote location is started.
   With the control device according to this aspect, there is no object that hinders the start of travel of the mobile body, and thus the operator can smoothly drive the mobile body through remote control.
(18) In the control device according to the above aspect, the target mobile body may include the mobile body of a model planned to be preferentially produced.
   With the control device according to this aspect, the mobile body that matches the set degree of priority is preferentially moved, and therefore it is possible to suppress the progress of the plan being affected.
(19) In the control device according to the above aspect, the target mobile body may include the mobile body presently positioned outdoors.
   With the control device according to this aspect, it is possible to suppress the mobile body in an abnormal state being left outdoors for a long time.
(20) In the control device according to the above aspect, the target mobile body may include the mobile body presently positioned indoors.
   With the control device according to this aspect, it is possible to reduce the flow of movement of the mobile bodies being stagnated in a limited indoor space.
(21) In the control device according to the above aspect, the processor may be configured to: specify at least one mobile body to be preferentially collected by driving of an operator on board as the target mobile body, from among the plurality of mobile bodies detected as being in the abnormal state; and notify the operator of instruction of collecting the target mobile body, together with information necessary for collecting.
   With the control device according to this aspect, at least one of the mobile bodies that have been stopped is specified as the mobile body to be manually driven and collected by the operator. It is easy to determine how the mobile bodies that have been stopped are to be handled in what order of priority. Further, it is possible to immediately start the work for the operator to drive and collect the specified mobile bodies.
(22) In the control device according to the above aspect, the target mobile body may include the mobile body, for which a distance from a present position to a location at which a downstream process is performed is equal to or less than a distance determined in advance.
   A mobile body can reach the location at which the downstream process is performed earlier when the mobile body positioned closer to the location at which the downstream process is performed than the other mobile bodies is preferentially moved, among the mobile bodies in an abnormal state, than when the mobile body positioned farther from the location at which the downstream process is performed than the other mobile bodies is preferentially moved. With the control device according to this aspect, the occurrence of an idle time in the downstream process can be reduced.
(23) In the control device according to the above aspect, the target mobile body may include the mobile body, for which a distance from a present position to a location at which an upstream process is performed is equal to or less than a distance determined in advance.
   When an abnormal state occurs in the mobile body, either while the upstream process is being performed or within a range determined in advance from the location at which the upstream process is performed immediately after the upstream process is performed, other mobile bodies cannot enter the location at which the upstream process is performed, stagnating the flow of the upstream process, for example. With the control device according to this aspect, the stagnation of the flow of the upstream process can be reduced when an abnormal state occurs in the mobile body.
(24) In the control device according to the above aspect, the target mobile body may include the mobile body, for which a time since a present time until a set expected shipping datetime is equal to or less than a time determined in advance.
   With the control device according to this aspect, the occurrence of a delay in shipping can be suppressed.
(25) In the control device according to the above aspect, the target mobile body may include the mobile body with no object that hinders travel of the mobile body present in a case where travel of the mobile body based on driving by the operator on board the mobile body is started.
   With the control device according to this aspect, there is no object that hinders the start of travel of the mobile body, and thus the operator can smoothly drive the mobile body.
(26) In the control device according to the above aspect, the target mobile body may include the mobile body of a model planned to be preferentially produced.
   With the control device according to this aspect, the mobile body that matches the set degree of priority is preferentially moved, and therefore it is possible to suppress the progress of the plan being affected.
(27) In the control device according to the above aspect, the target mobile body may include the mobile body presently positioned outdoors.
   With the control device according to this aspect, it is possible to suppress the mobile body in an abnormal state being left outdoors for a long time.
(28) In the control device according to the above aspect, the target mobile body may include the mobile body presently positioned indoors.
   With the control device according to this aspect, it is possible to reduce the flow of movement of the mobile bodies being stagnated in a limited indoor space.
(29) A second aspect of the present disclosure provides a control method. The control method is a method by which a computer controls a mobile body performing automated driving autonomously or through remote control not based on remote operations by an operator located at a remote location, including: specifying, in a case where an abnormal state occurs in a plurality of mobile bodies that are performing the automated driving autonomously or through the remote control, at least one mobile body to preferentially perform the automated driving autonomously or through the remote control as a target mobile body, from among the plurality of mobile bodies; and performing control to cause the target mobile body to perform the automated driving autonomously or through the remote control.
   With the control method according to the above aspect, it is possible to immediately resume automated driving performed autonomously or through remote control for mobile bodies specified as targets to be preferentially handled.
(30) A third aspect of the present disclosure provides a control method. The control method is a method by which a computer controls a mobile body performing automated driving performed autonomously or through remote control not based on remote operations by an operator located at a remote location, including: specify, in a case where an abnormal state occurs in a plurality of mobile bodies being performing the automated driving autonomously or through the remote control, at least one mobile body for which the automated driving based on the remote operations by the operator is to be preferentially started as a target mobile body, from among the plurality of mobile bodies; and performing control of starting the automated driving based on the remote operations by the operator for the target mobile body.
   With the control method according to the above aspect, it is possible to immediately start automated driving based on remote operations by an operator for mobile bodies specified as targets to be preferentially handled.
(31) A fourth aspect of the present disclosure provides a control method. The control method is a method by which a computer controls a mobile body performing automated driving autonomously or through remote control not based on remote operations by an operator located at a remote location, including: specifying, in a case where an abnormal state occurs in a plurality of mobile bodies performing the automated driving autonomously or through the remote control, at least one mobile body to be preferentially collected by driving of an operator on board as a target mobile body, from among the plurality of mobile bodies; and notify the operator of instruction of collecting of the target mobile body, together with information necessary for collecting.
   With the control method according to the above aspect, it is possible to immediately start the work for the operator to drive and collect the mobile bodies specified as targets to be preferentially handled.

The present disclosure can be implemented in a variety of aspects, and can be implemented in aspects such as a remote operation system, a remote operation device, a control method, a method of manufacturing a mobile body, etc., for example.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates the configuration of a remote operation system;
FIG. 2 is a schematic diagram illustrating an overview of a mobile body;
FIG. 3 is a schematic diagram illustrating an overview of a remote operation device;
FIG. 4 illustrates an operator input device;
FIG. 5 is a flowchart illustrating a vehicle driving method implemented by the remote control device;
FIG. 6 is a flowchart illustrating a control method according to a first embodiment;
FIG. 7 is a flowchart illustrating a control method according to a second embodiment;
FIG. 8 is a flowchart illustrating a control method according to a third embodiment;
FIG. 9 is a block diagram illustrating the functional configuration of a mobile body that can travel in an autonomous driving mode; and
FIG. 10 is a flowchart illustrating a method of driving the mobile body set to the autonomous driving mode.

### DETAILED DESCRIPTION OF EMBODIMENTS

### A. First Embodiment

### A1. Configuration of Remote Control System

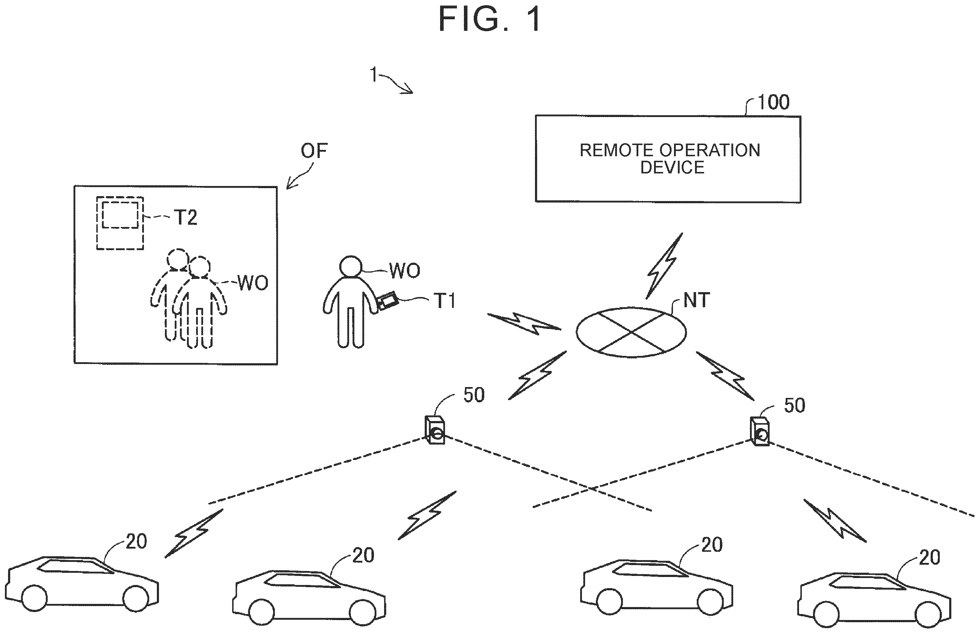

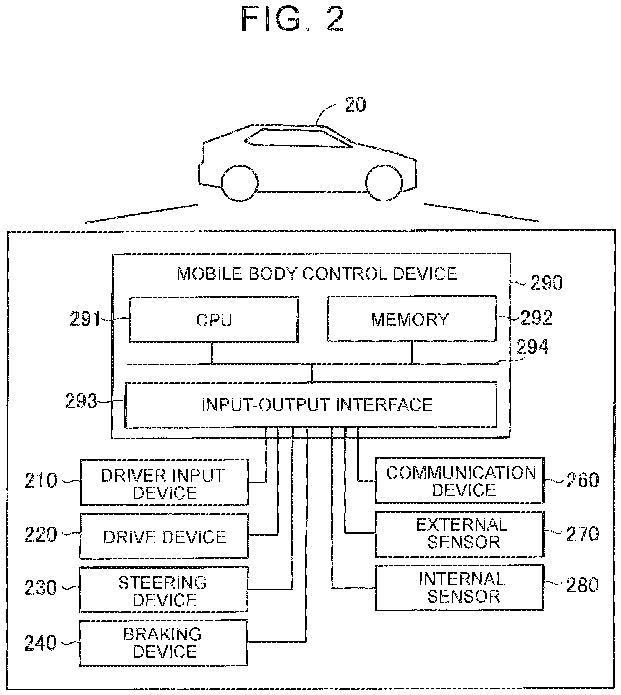

FIG. 1 illustrates the configuration of a remote operation system 1 according to a first embodiment. FIG. 2 is a schematic diagram illustrating an overview of a mobile body 20. The remote operation system 1 illustrated in FIG. 1 is used in a factory that produces mobile bodies 20. The remote operation system 1 controls the mobile bodies 20 that can travel based on remote operations. The remote operation system 1 is used in the process of manufacturing mobile bodies, such as an assembly process and an inspection process of the mobile bodies 20. The remote operation system 1 conveys the mobile bodies 20 over a conveyance section determined in advance in the manufacturing process. The processes of assembling, inspecting, etc. the mobile bodies 20 being conveyed are performed by an operator or a facility.

In the present embodiment, the mobile bodies 20 are each a battery electric vehicle (BEV) that can travel through automated driving. The term "unattended operation" means operation not based on driving operations by a driver on board the mobile body 20. The driving operations mean operations related to at least one of "traveling", "turning", and "stopping" of a vehicle. The automated driving is achieved through automatic or manual remote control performed using a device provided external to the mobile body 20 or through autonomous control of the mobile body 20. A person that does not perform the driving operations may be on board the mobile body 20 that travels through the automated driving. Examples of the person that does not perform the driving operations include a person simply seated on a seat of the mobile body 20 and a person that performs work different from the driving operations, such assembly, inspection, and operation of switches, while being on board the mobile body 20. Operation based on the driving operations by a driver on board the mobile body 20 is occasionally referred to as "attended operation".

The remote operation system 1 includes a plurality of mobile bodies 20, a plurality of detection devices 50, and a remote operation device 100.

The mobile bodies 20 travel in any of an attended driving mode, a remote manual driving mode, and a remote automated driving mode.

The attended driving mode is a driving mode in which the mobile body 20 travels according to driving operations by the driver on board the mobile body 20. When the attended driving mode is set, a travel condition for the mobile body 20 is determined by the driver on board the mobile body 20 operating a driver input device 210 (see FIG. 2) provided in the mobile body 20. The driver input device 210 includes a steering wheel, an accelerator pedal, a brake pedal, etc. (not illustrated). The mobile body 20 adopts a steer-by-wire system, a throttle-by-wire system, and a brake-by-wire system. The mobile body 20 travels according to the determined travel condition. The travel condition is a condition that prescribes travel operation of the mobile body 20. Examples of the travel condition include the travel speed, acceleration, and wheel steering angle.

The remote manual driving mode is a driving mode in which travel of the mobile body 20 is remotely controlled based on driving operations by an operator not on board the mobile body 20. When the remote manual driving mode is set, a travel condition is generated by the remote operation device 100 to be discussed later according to operations by the operator on an operator input device to be discussed later. The remote operation device 100 is provided at a different location from the mobile body 20. Travel of the mobile body 20 is controlled according to the travel condition generated by the remote operation device 100. Driving of the mobile body 20 in the remote manual driving mode is also referred to as remote manual driving. In the remote manual driving mode, it is not necessary for the driver to get on board the mobile body 20 and operate a driving input device provided in the mobile body 20, in order for the mobile body 20 to travel.

The remote automated driving mode is a driving mode in which travel of the mobile body 20 is controlled according to a travel condition generated by the remote operation device 100. When the remote automated driving mode is set, a travel condition is generated by the remote operation device 100 without the operator operating the operator input device. Travel of the mobile body 20 is controlled according to the travel condition generated by the remote operation device 100. Driving of the mobile body 20 in the remote automated driving mode is also referred to as remote automated driving. In the remote automated driving mode, it is not necessary for the driver to operate the driving input device or for the operator not on board the mobile body 20 to operate the operator input device. Driving of the mobile body 20 in the remote automated driving mode is automated driving. The term "automated driving" refers to travel in which the mobile body 20 is caused to travel autonomously with a system, rather than the driver, performing all recognitions, predictions, determinations, and operations related to driving operations.

As illustrated in FIG. 2, the mobile body 20 includes a driver input device 210, a drive device 220 that drives the mobile body 20, a steering device 230 that changes the advancing direction of the mobile body 20, a braking device 240 that brakes the mobile body 20, a communication device 260, an external sensor 270, an internal sensor 280, and a mobile body control device 290 that controls the various portions of the mobile body 20. In the present embodiment, the drive device 220 includes a battery, a travel motor to be driven by electric power from the battery, and drive wheels to be rotated by the travel motor.

The communication device 260 is a device that communicates with the remote operation device 100 (see FIG. 1) through wireless communication. The communication device 260 communicates with a device outside the mobile body 20 through controller area network (CAN) communication, for example. The CAN communication is a communication standard that allows transmission and reception in multiple directions. For example, the communication device 260 communicates with the remote operation device 100 connected to a network NT via an access point (not illustrated) in the factory.

The external sensor 270 includes a plurality of sensors that detects the status of the surroundings of the mobile body 20. The external sensor 270 may include an in-vehicle camera, a millimeter wave radar, a Light Detection and Ranging (LiDAR), an ultrasonic sensor, etc. mounted on the mobile body 20. The in-vehicle camera captures at least a part of the area around the mobile body 20. The radar detects the distance, relative angle, relative speed, etc. with respect to an object that is present in the area around the mobile body 20. The lidar detects the distance and relative angle with respect to an object that is present in the area around the mobile body 20, the shape of the object, etc. The sensors output a detected value to the mobile body control device 290.

The internal sensor 280 includes a plurality of sensors that detects the internal state of the mobile body 20. The internal sensor 280 may include a current sensor, a voltage sensor, a battery temperature sensor, a vehicle speed sensor, an acceleration sensor, a yaw rate sensor, a steering angle sensor, a global navigation satellite system (GNSS) receiver, etc. mounted on the mobile body 20. The current sensor detects the value of an output current from the battery of the mobile body 20. The voltage sensor detects the value of an output voltage from the battery of the mobile body 20. The battery temperature sensor detects the temperature of the battery of the mobile body 20. The vehicle speed sensor detects the speed of the mobile body 20. The acceleration sensor detects the acceleration of the mobile body 20. The yaw rate sensor detects the yaw axis angular velocity (yaw rate) of the mobile body 20. The steering angle sensor detects the steering angle of each wheel of the mobile body 20. The GNSS receiver receives GNSS information. The sensors output a detected value to the mobile body control device 290.

The mobile body control device 290 is a computer that includes a central processing unit (CPU) 291, a memory 292, an input-output interface 293, and an internal bus 294. The mobile body control device 290 is constituted of one or more electronic control units (ECUs), for example.

The CPU 291, the memory 292, and the input-output interface 293 are connected so as to be bidirectionally communicable via the internal bus 294. The driver input device 210, the drive device 220, the steering device 230, the braking device 240, the communication device 260, the external sensor 270, and the internal sensor 280 are connected to the input-output interface 293. The memory 292 stores various programs and data. The CPU 291 controls the various portions of the mobile body 20 by executing the programs stored in the memory 292.

In the present embodiment, the mobile body control device 290 can cause the mobile body 20 to travel by controlling the various portions of the mobile body 20 according to driving operations performed using the driver input device 210 by the driver on board the mobile body 20 when the attended driving mode is set. The mobile body control device 290 causes the mobile body 20 to travel by controlling the various portions of the mobile body 20 according to a control instruction received from the remote operation device 100 when the remote manual driving mode or the remote automated driving mode is set.

In addition, the mobile body control device 290 transmits information detected by the external sensor 270 to the remote operation device 100 via the communication device 260 as mobile body sensor information. The mobile body control device 290 transmits information detected by the internal sensor 280 to the remote operation device 100 via the communication device 260 as mobile body state information.

The detection devices 50 illustrated in FIG. 1 are used to monitor the mobile bodies 20. The detection devices 50 include a plurality of cameras (external cameras) installed in the site of the factory. The positions and the orientations of the detection devices 50 are adjusted in advance. The detection devices 50 communicate with the remote operation device 100 connected to the network NT via an access point (not illustrated) in the factory, for example. The detection devices 50 transmit external captured image information acquired by capturing a capturing range to the remote operation device 100. The external captured image information may be movie data acquired by the detection devices 50, for example.

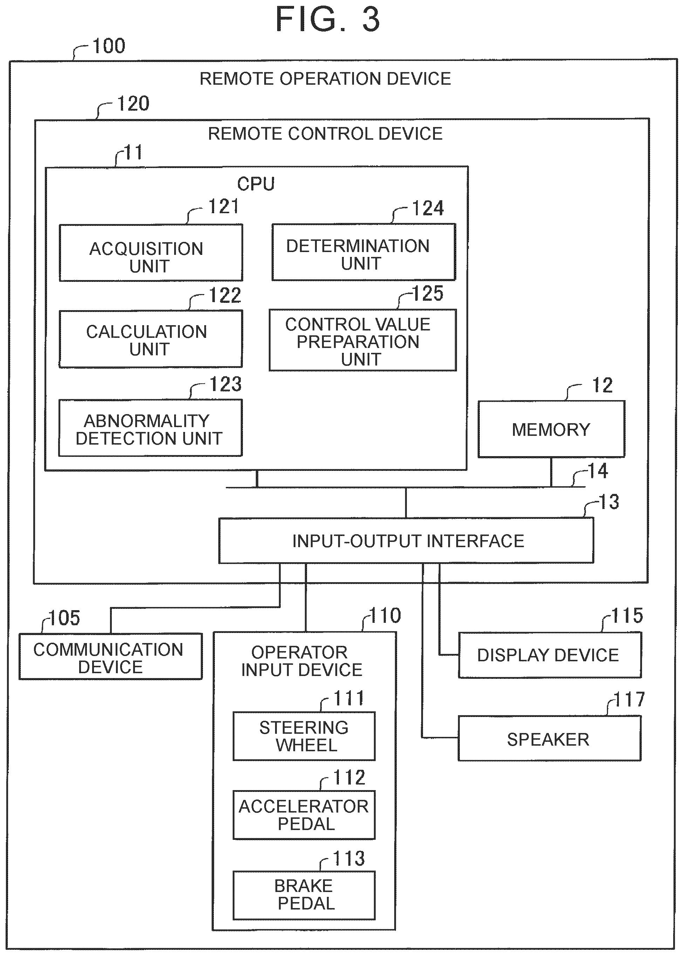

FIG. 3 is a schematic diagram illustrating an overview of the remote operation device 100. The remote operation device 100 is a device that is used to remotely operate travel of the mobile bodies 20.

The remote operation device 100 includes a communication device 105, at least one operator input device 110, at least one display device 115, at least one speaker 117, and a remote control device 120. The remote control device 120 is also called a control device.

The communication device 105 communicably connects the remote operation device 100 and the mobile bodies 20 and the detection devices 50. The communication device 105 may be a wireless communication device, for example.

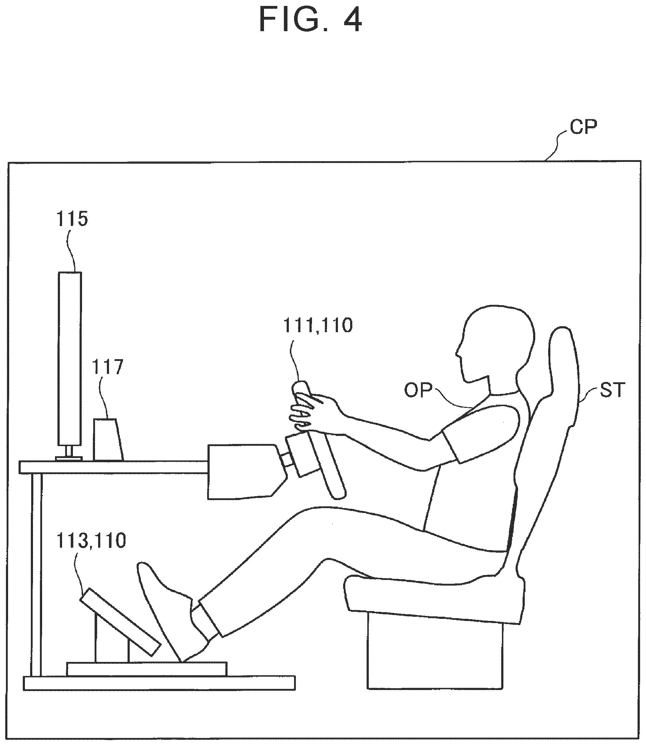

FIG. 4 illustrates the operator input device 110. The operator input device 110 is a device that is operated by an operator OP to remotely operate the mobile body 20 set to the remote manual driving mode. As illustrated in FIG. 3, the operator input device 110 is connected to the remote control device 120. As illustrated in FIG. 4, the operator input device 110 is disposed in a pilot compartment (cockpit) CP together with the display device 115 and the speaker 117. The pilot compartment CP is provided at a different location from the mobile body 20. The operator input device 110 includes a steering wheel 111 as an input device that is used to steer the mobile body 20 based on remote operations, an accelerator pedal 112 as an input device that is used to accelerate the mobile body 20 based on remote operations, and a brake pedal 113 as an input device that is used to decelerate the mobile body 20 based on remote operations. In FIG. 4, the operator OP is illustrated as seen from a side surface, and therefore the accelerator pedal 112 is not illustrated. The operator OP is seated on a pilot's seat ST provided in the pilot compartment CP to operate the operator input device 110.

The display device 115 displays an image that illustrates various kinds of information according to control by the remote control device 120. The display device 115 is installed at a position at which the display device 115 is visually recognizable by the operator OP taking the position and the posture at which the operator input device 110 is operable. When the operator OP takes the position and the posture at which the operator input device 110 is operable, it is meant that the operator OP is seated on the pilot's seat ST in the pilot compartment CP, for example. The display device 115 displays internal captured image information acquired by the in-vehicle camera and external captured image information acquired by the detection devices 50, for example, according to control by the remote control device 120.

The speaker 117 reproduces audio data according to control by the remote control device 120. For example, the speaker 117 reproduces audio data acquired by a microphone (not illustrated) attached to the in-vehicle camera mounted on the mobile body 20. The audio data are included in the internal captured image information acquired by the in-vehicle camera. The speaker 117 also reproduces audio data acquired by a microphone (not illustrated) attached to the cameras as the detection devices 50. The audio data are included in the external captured image information acquired by the detection devices 50.

The remote control device 120 illustrated in FIG. 3 is a device that is used to remotely operate travel of the mobile body 20.

When the mobile body 20 is set to the remote manual driving mode, the operator operates the operator input device 110, in order to cause the mobile body 20 to travel. The remote control device 120 generates a control instruction that matches driving operations by the operator, and transmits the control instruction to the mobile body 20. The mobile body 20 travels according to the control instruction received from the remote control device 120.

When the mobile body 20 is set to the remote automated driving mode, the remote control device 120 generates a control instruction using the mobile body sensor information, the mobile body state information, etc. The mobile body 20 travels according to the control instruction received from the remote control device 120.

The remote control device 120 is constituted from a computer that includes a CPU 11, a memory 12, an input-output interface 13, and an internal bus 14.

The CPU 11, the memory 12, and the input-output interface 13 are connected so as to be bidirectionally communicable via the internal bus 14. The communication device 105, the operator input device 110, the display device 115, and the speaker 117 are connected to the input-output interface 13. The memory 12 stores various programs and data. For example, the memory 12 stores information on a planned route for the mobile body 20. The planned route is a path which is set in advance and along which the mobile body 20 should travel. The respective functions of an acquisition unit 121, a calculation unit 122, an abnormality detection unit 123, a determination unit 124, and a control value preparation unit 125 are implemented by the CPU 11 executing the programs stored in the memory 12.

The acquisition unit 121 acquires the mobile body sensor information and the mobile body state information from the mobile body 20. The acquisition unit 121 also acquires the external captured image information from the detection devices 50.

The calculation unit 122 calculates the position and the orientation of the mobile body 20. For example, the position and the orientation of the mobile body 20 may be estimated using the external captured image information. The position of the mobile body 20 can be acquired by calculating the coordinates of measurement points of the mobile body 20 in an image coordinate system using the outer shape of the mobile body 20 detected from the external captured image information, and converting the calculated coordinates into coordinates in the global coordinate system, for example.

The orientation of the mobile body 20 can be estimated based on the orientation of a vector related to motion of the mobile body 20 calculated using an optical flow method, for example. In the optical flow method, the orientation of the vector related to the motion of the mobile body 20 is calculated from variations in position of feature points of the mobile body between frames of the captured image. Alternatively, the orientation of the mobile body 20 may be calculated using a detected value from the yaw rate sensor mounted on the mobile body 20.

The outer shape of the mobile body 20 can be detected by inputting the captured image to a detection model that makes use of artificial intelligence, for example. Examples of the detection model include a trained machine learning model that has been trained so as to achieve one of semantic segmentation and instance segmentation, for example. As the machine learning model, a convolutional neural network (hereinafter referred to as a "CNN") trained through supervised learning using a learning data set can be used, for example. The learning data set includes a plurality of training images including the mobile body, and a correct answer label indicating whether each region in the training images is a region indicating the mobile body or a region indicating an area other than the mobile body. During training of the CNN, parameters of the CNN are preferably updated so as to reduce an error between the result output from the detection model and the correct answer label through back propagation (error back propagation method).

The abnormality detection unit 123 detects the occurrence of an abnormal state about the mobile body 20. In the present embodiment, the abnormality detection unit 123 detects the occurrence of an abnormal state about the mobile body 20 using the mobile body sensor information and the mobile body state information on the mobile body 20, the external captured image information, information that indicates the status of communication between the remote operation device 100 and the mobile body 20, etc. when a plurality of mobile bodies 20 set to the remote automated driving mode is traveling. The abnormal state about the mobile body 20 refers to a state in which the mobile body 20 set to the remote automated driving mode has been subjected to an abnormal stop. The abnormal stop refers to an unintended stop of the mobile body 20 that is remotely operated in the remote automated driving mode.

The determination unit 124 determines whether each mobile body 20 is a target to be preferentially handled when a plurality of mobile bodies 20 are in an abnormal state. The mobile body 20 as the target is preferentially handled by resuming automated driving in the remote automated driving mode. In the present embodiment, the target for which automated driving in the remote automated driving mode is preferentially started is referred to as a target mobile body. The determination unit 124 determines the mobile body 20 that meets a first condition determined in advance as the target mobile body. The first condition is a condition determined in relation to the degree of priority to resume automated driving in the remote automated driving mode. The target mobile body, that is, the mobile body 20 for which it is determined to resume automated driving in the remote automated driving mode, is subjected to control for resuming automated driving while being kept in the remote automated driving mode. The first condition will be discussed in detail later. The determination unit 124 is also called a specifying unit.

On the other hand, the determination unit 124 determines the mobile body 20 that does not meet the first condition as a mobile body (hereinafter referred to as a non-target mobile body) for which automated driving in the remote automated driving mode is not preferentially resumed. For the non-target mobile body, switching is made from the remote automated driving mode to a different driving mode. For example, the mobile body 20 as the non-target mobile body is switched to the remote manual driving mode to travel based on remote operations by the operator. Alternatively, the mobile body 20 as the non-target mobile body is switched to the attended driving mode, and driven and collected by an operator WO.

The determination unit 124 transmits, for each of the mobile bodies 20 that have been subjected to an abnormal stop, a notification of switching of the driving mode according to a determination result as to whether the mobile body 20 is a target for which automated driving in the remote automated driving mode is to be resumed to the control value preparation unit 125.

The control value preparation unit 125 generates a control instruction for remotely controlling the mobile body 20 set to the remote automated driving mode. The control value preparation unit 125 is also called a control unit. The control value preparation unit 125 generates a control instruction for the mobile body 20 using the mobile body sensor information, the mobile body state information, the position and the orientation of the mobile body 20 calculated by the calculation unit 122, etc., and transmits the control instruction to the mobile body 20. For example, the control instruction is generated as a control value that represents the acceleration and the steering angle. In addition, the control value preparation unit 125 generates a control instruction that matches driving operations on the operator input device 110 by the operator, and transmits the control instruction to the mobile body 20, in order to remotely control the mobile body 20 set to the remote manual driving mode.

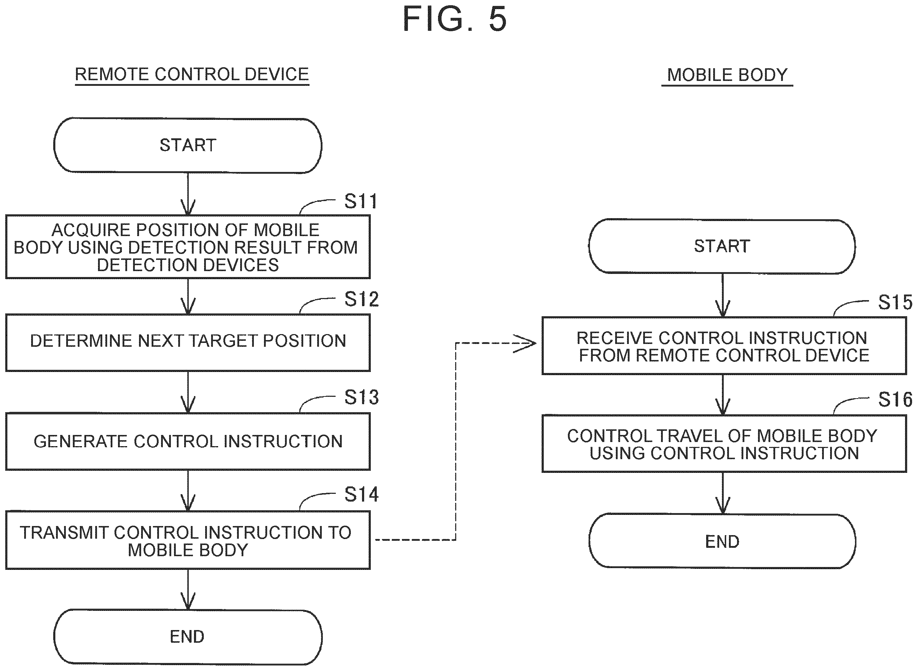

FIG. 5 is a flowchart illustrating a method by which the remote control device 120 causes the mobile body 20 set to the remote automated driving mode to travel. The remote control device 120 acquires the position of the mobile body 20 using the detection result from the detection devices 50 (step S11). Specifically, the calculation unit 122 calculates the position of the mobile body 20 using the external captured image information acquired by the acquisition unit 121 from the detection devices 50. The control value preparation unit 125 acquires information on the position of the mobile body 20 calculated by the calculation unit 122. The information on the position of the mobile body 20 includes X, Y, and Z coordinates in the global coordinate system of the factory.

The control value preparation unit 125 determines a target position for which the mobile body 20 should be bound next (step S12). In the present embodiment, the target position is represented by X, Y, and Z coordinates in the global coordinate system of the factory. The memory 12 of the remote control device 120 stores in advance information on the planned route as a path along which the mobile body 20 should travel. The planned route is represented by a node that indicates a departure location, nodes that indicate pass points, a node that indicates a destination location, and links that connect between the nodes. The control value preparation unit 125 determines the target position for which the mobile body 20 should be bound next using the position of the mobile body 20 and the planned route. The control value preparation unit 125 determines the target position on the planned route further ahead of the present location of the mobile body 20.

The control value preparation unit 125 generates a control instruction for causing the mobile body 20 to travel toward the determined target position (step S 13). In the present embodiment, the control instruction includes the acceleration and the steering angle of the mobile body 20 as parameters. The control value preparation unit 125 calculates a travel speed of the mobile body 20 from transitions in position of the mobile body 20, and makes a comparison between the calculated travel speed and a target speed for the mobile body 20 determined in advance. The control value preparation unit 125 determines the acceleration such that the mobile body 20 accelerates when the travel speed is lower than the target speed, and determines the acceleration such that the mobile body 20 decelerates when the travel speed is higher than the target speed. The control value preparation unit 125 determines the steering angle such that the mobile body 20 does not deviate from the planned route when the mobile body 20 is positioned on the planned route, and determines the steering angle such that the mobile body 20 returns to the planned route when the mobile body 20 is not positioned on the planned route, or in other words when the mobile body 20 has deviated from the planned route.

The control value preparation unit 125 transmits the generated control instruction to the mobile body 20 (step S14). The control value preparation unit 125 acquires the position of the mobile body 20, determines a target position, generates a control instruction, and transmits the control instruction repeatedly in cycles determined in advance.

The mobile body control device 290 mounted on the mobile body 20 receives a control instruction from the remote control device 120 (step S15), and controls the drive device 220, the steering device 230, and the braking device 240 using the received control instruction so as to cause the mobile body 20 to travel at the acceleration and the steering angle represented by the control instruction (step S16). The mobile body control device 290 receives a control instruction and performs control related to travel of the mobile body 20 in cycles determined in advance. The mobile body 20 can be moved without using a conveyance facility such as a crane or a conveyor, by causing the mobile body 20 to travel through remote control.

The configuration unique to the present embodiment will be described below. In the present embodiment, the control value preparation unit 125 performs control for resuming automated driving of the mobile body 20 while being kept in the remote automated driving mode upon receiving from the determination unit 124 a notification that switching of the driving mode is not made for the mobile body 20 that has been subjected to an abnormal stop. The control for resuming automated driving of the mobile body 20 includes not only resuming automated driving but also making preparations for resuming automated driving.

In addition, the control value preparation unit 125 performs control for switching the driving mode of the mobile body 20 to the remote manual driving mode and starting driving of the mobile body 20 in the remote manual driving mode upon receiving from the determination unit 124 a notification that switching is made to the remote manual driving mode for the mobile body 20 that has been subj ected to an abnormal stop. The control for starting driving of the mobile body 20 in the remote manual driving mode includes not only starting driving in the remote manual driving mode but also making preparations for starting driving in the remote manual driving mode.

In addition, the control value preparation unit 125 performs control so as to switch the mobile body 20 from the remote automated driving mode to the attended driving mode upon receiving from the determination unit 124 a notification that switching is made to the attended driving mode for the mobile body 20 that has been subjected to an abnormal stop.

### A2. First Condition

At least one of the conditions listed below can be adopted as the first condition. Two or more of the conditions listed below may be selected as the first condition.

### Condition 1-1

The distance from the present position of the mobile body 20 to the location at which the downstream process is performed is equal to or less than a distance determined in advance.

### Condition 1-2

The distance from the present position of the mobile body 20 to the location at which the upstream process is performed is equal to or less than a distance determined in advance.

### Condition 1-3

The time since the present time until an expected shipping datetime set for the mobile body 20 is equal to or less than a time determined in advance.

### Condition 1-4

The model of the mobile body 20 corresponds to a model planned to be produced preferentially.

### Condition 1-5

The present position of the mobile body 20 is outdoors.

### Condition 1-6

The present position of the mobile body 20 is indoors.

### Condition 1-7

There are no stationary objects, including people and other mobile bodies, on a travel route expected for the mobile body 20.

### A3. Conditions Adoptable as First Condition

### Condition 1-1

It is assumed that an abnormal state is caused in two mobile bodies 20, and that one of the mobile bodies 20 is positioned closer to the location at which the downstream process is performed than the other mobile body 20, for example. In this case, either of the mobile bodies 20 can reach the location at which the downstream process is performed earlier when the mobile body 20 positioned closer to the location at which the downstream process is performed is preferentially moved to the location at which the downstream process is performed than when the mobile body 20 positioned farther from the location at which the downstream process is performed is preferentially moved. Hence, the occurrence of an idle time in the downstream process can be efficiently reduced.

The remote control device 120 determines whether the distance from the present position of the mobile body 20 to the location at which the downstream process is performed is equal to or less than a distance determined in advance using the mobile body sensor information and the mobile body state information acquired by the mobile body 20 and information on the location at which the downstream process is performed. The information on the distance to the location at which the downstream process is performed and the information on the distance determined in advance are stored in advance in the memory 12.

The remote control device 120 can easily determine the mobile body 20 that should be preferentially handled, among the mobile bodies 20 in an abnormal state, according to whether Condition 1-1 is met. In addition, the occurrence of an idle time in the downstream process is reduced by preferentially handling the abnormal state of the mobile body 20 for which the distance from the present position to the location at which the downstream process is performed is equal to or less than the distance determined in advance.

### Condition 1-2

It is assumed that the mobile body 20 is subj ected to an abnormal stop, either while the upstream process is being performed or within a range determined in advance from the location at which the upstream process is performed immediately after the upstream process is performed, for example. In this case, other mobile bodies 20 cannot enter the location at which the upstream process is performed, stagnating the flow of the upstream process, for example. The stagnation of the flow of the upstream process can be efficiently reduced when the mobile body 20 positioned closer to the location at which the upstream process is performed, among the mobile bodies 20 in an abnormal state, is moved in preference to the other mobile bodies 20.

The remote control device 120 determines whether the distance from the present position of the mobile body 20 to the location at which the upstream process is performed is equal to or less than a distance determined in advance using the mobile body sensor information and the mobile body state information acquired by the mobile body 20 and information on the location at which the upstream process is performed. The information on the distance to the location at which the upstream process is performed and the information on the distance determined in advance are stored in advance in the memory 12.

The remote control device 120 can easily determine the mobile body 20 that should be preferentially handled, among the mobile bodies 20 in an abnormal state, according to whether Condition 1-2 is met. In addition, the stagnation of the flow of the upstream process is reduced by preferentially handling the abnormal state of the mobile body 20 for which the distance from the present position to the location at which the upstream process is performed is equal to or less than the distance determined in advance.

### Condition 1-3

It is desirable that the mobile body 20 with a close expected shipping datetime, among the mobile bodies 20 in an abnormal state, should be moved in preference to the other mobile bodies 20, in order to meet the expected shipping datetime.

The remote control device 120 determines whether the time before the expected shipping datetime is equal to or less than a time determined in advance based on the present time and the expected shipping datetime set for the mobile body 20. It is assumed that the remote control device 120 can acquire information on the present time from a network time protocol (NTP) server. Information on the expected shipping datetime set for the mobile body 20 and information on the time determined in advance are stored in advance in the memory 12.

The remote control device 120 can easily determine the mobile body 20 that should be preferentially handled, among the mobile bodies 20 in an abnormal state, according to whether Condition 1-3 is met. In addition, the occurrence of a delay in shipping is suppressed by preferentially handling the abnormal state of the mobile body 20 with a close expected shipping datetime.

### Condition 1-4

It is occasionally planned to preferentially produce mobile bodies 20 corresponding to a particular model. For example, vehicles with special specifications may be selected as the mobile bodies 20 corresponding to the particular model. Alternatively, vehicles of a popular model may be selected as the mobile bodies 20 of the specific model. It is desirable that the mobile bodies 20 corresponding to the particular model should be shipped more immediately than mobile bodies 20 not corresponding to the particular model.

The remote control device 120 determines whether the model of the mobile body 20 corresponds to a model planned to be preferentially produced, based on the model of the mobile body 20. Information on the particular model planned to be preferentially produced is stored in advance in the memory 12. Information on the model of each mobile body 20 is also stored in advance in the memory 12.

The remote control device 120 can easily determine the mobile body 20 that should be preferentially handled, among the mobile bodies 20 in an abnormal state, according to whether Condition 1-4 is met. In addition, the occurrence of a delay in the production plan is suppressed by preferentially handling the abnormal state of the mobile body 20 corresponding to the particular model.

### Condition 1-5

In order to avoid the mobile body 20 being exposed to the weather, it is desirable that mobile bodies 20 located outdoors, among the mobile bodies 20 in an abnormal state, should be moved immediately.

The remote control device 120 determines whether the mobile body 20 is presently positioned outdoors using the mobile body sensor information and the mobile body state information, the external captured image information, and factory map information. The factory map information is stored in advance in the memory 12. It may be determined that Condition 1-5 is met when the mobile body 20 is located outdoors in a range determined in advance, rather than being located outdoors in the entire site of the factory.

The remote control device 120 can easily determine the mobile body 20 that should be preferentially handled, among the mobile bodies 20 in an abnormal state, according to whether Condition 1-5 is met. In addition, it is possible to avoid the mobile body 20 being exposed to the weather for a long time by preferentially handling the abnormal state of the mobile body 20 located outdoors.

### Condition 1-6

When the mobile body 20 is subjected to an abnormal stop in a limited indoor space, movement of the other mobile bodies 20 may be hindered. As a result, the flow of movement of the mobile bodies 20 may be stagnated.

The remote control device 120 determines whether the mobile body 20 is presently positioned indoors using the mobile body sensor information and the mobile body state information, the external captured image information, and factory map information. It may be determined that Condition 1-6 is met when the mobile body 20 is located indoors in a range determined in advance, rather than being located indoors in the entire site of the factory.

The remote control device 120 can easily determine the mobile body 20 that should be preferentially handled, among the mobile bodies 20 in an abnormal state, according to whether Condition 1-6 is met. In addition, it is possible to suppress stagnation of the flow of movement of the mobile bodies 20 by preferentially handling the abnormal state of the mobile body 20 located indoors.

### Condition 1-7

When an object is stationary on a travel route expected for the mobile body 20, it is necessary for the mobile body 20 to avoid a collision with the object, and it is not desirable to start travel of the mobile body 20. The state in which an object is stationary includes not only a state in which the object is completely stationary, but also a state in which the object can be considered to be substantially stationary. The object includes not only another mobile body 20, but also a person. The case where a stationary object is present on a travel route expected for the mobile body 20 includes a case where another mobile body 20 is subjected to an abnormal stop on an expected travel route, a case where an operator is doing some work on an expected travel route, etc.

The remote control device 120 determines whether an object is present on a travel route expected for the mobile body 20 using information on the travel route expected for the mobile body 20 and the external captured image information acquired from the detection devices 50. The information on the travel route expected for the mobile body 20 is stored in advance in the memory 12.

The remote control device 120 can easily determine the mobile body 20 that should be preferentially handled, among the mobile bodies 20 in an abnormal state, according to whether Condition 1-7 is met. When no object is present on the expected travel route, it is easy to autonomously drive the mobile body 20 through remote control. In addition, the mobile body 20 can be immediately moved by preferentially handling the mobile body 20 that meets a condition that no stationary object is present on the expected travel route.

### A4. Determination Process for Switching of Driving Mode

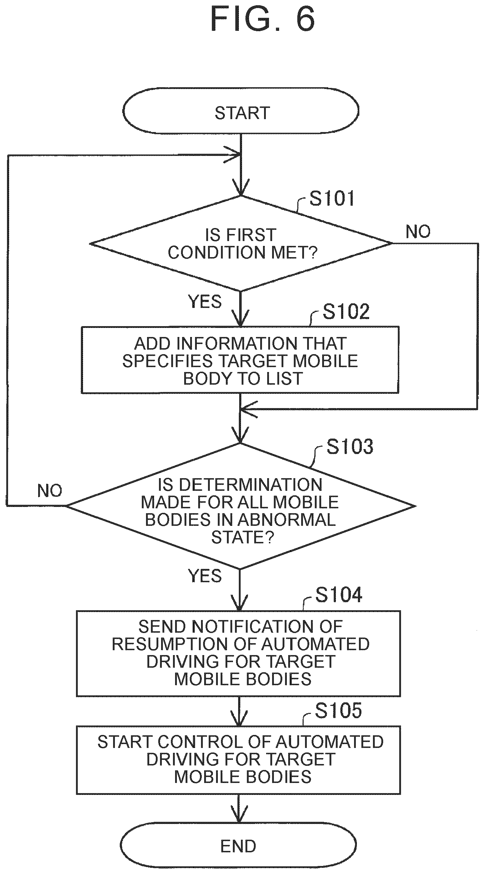

FIG. 6 is a flowchart illustrating a control method according to the embodiment. The process illustrated in FIG. 6 is started when the abnormality detection unit 123 detects the occurrence of an abnormal state of two or more mobile bodies 20 based on mobile body sensor information and mobile body internal information on each of the mobile bodies 20 acquired by the acquisition unit 121 and the external captured image information. An example in which Condition 1-3 is adopted as the first condition will be described below. Here, an example in which N (N is an integer of two or more) mobile bodies 20 have been subjected to an abnormal stop is described.

In step S101, the determination unit 124 determines whether Condition 1-3 as the first condition is met for one of the N mobile bodies 20 that have been subjected to an abnormal stop. Specifically, the determination unit 124 determines whether the time before the expected shipping datetime set for the mobile body 20 is equal to or less than a time determined in advance. The determination unit 124 determines that the first condition is met when the time before the expected shipping datetime set for the mobile body 20 is equal to or less than the time determined in advance. When it is determined that the first condition is met (step S101: YES), the determination unit 124 executes the process in step S102.

When the time before the expected shipping datetime set for the mobile body 20 is not equal to or less than the time determined in advance (step S101: NO), on the other hand, the determination unit 124 determines that the first condition is not met, and executes the process in step S 103.

In step S102, the determination unit 124 adds information that specifies the mobile body 20 for which it is determined in S101 that the first condition is met, that is, a target mobile body, to a list of target mobile bodies.

When a determination for the first condition is not made in step S 103 for all the N mobile bodies 20 that have been in an abnormal state (step S103: NO), the determination unit 124 executes the process in step S101 again. When step S101 is executed again, the determination unit 124 executes the process in step S101 for one of the N mobile bodies 20 that have been in an abnormal state, for which a determination for the first condition has not been made.

When a determination for the first condition is made in step S 103 for all the N mobile bodies 20 that have been in an abnormal state (step S103: YES), on the other hand, the determination unit 124 executes the process in step S104. When a determination for the first condition is finished for all the N mobile bodies 20 that have been in an abnormal state, the list of target mobile bodies includes information that specifies the mobile bodies 20 that meet the first condition, among the N mobile bodies 20 that have been in an abnormal state. When there is no mobile body 20 that meets the first condition, among the N mobile bodies 20 that have been in an abnormal state, however, the list of target mobile bodies is empty.

In step S104, the determination unit 124 outputs a notification that automated driving in the remote automatic control mode is to be resumed, together with the list of target mobile bodies, to the control value preparation unit 125. For example, when two mobile bodies 20, of the N mobile bodies 20 that have been subjected to an abnormal stop, meet the first condition, automated driving is resumed for the two mobile bodies 20 that meet the first condition while being kept in the remote automatic control mode.

In step S105, the control value preparation unit 125 transmits a control instruction to resume automated driving in the remote automatic control mode to the mobile bodies 20 as the target mobile bodies included in the list. When the list of target mobile bodies is empty, however, there are no mobile bodies 20 for which automated driving in the remote automatic control mode is to be resumed, and therefore a control instruction to resume automated driving in the remote automatic control mode is not transmitted. Then, the process illustrated in FIG. 6 is ended.

After that, the control value preparation unit 125 remotely controls the mobile bodies 20 as the target mobile bodies by transmitting a control instruction to the mobile bodies 20 as the target mobile bodies as appropriate.

The mobile bodies 20 (non-target mobile bodies) for which it is determined in step S101 that the first condition is not met are not targets to be preferentially handled. For example, the determination unit 124 performs the following processes after starting remote control for the mobile bodies 20 as the target mobile bodies through the process in step S 105 in FIG. 6 discussed above. The determination unit 124 determines to switch to the remote manual driving mode for the non-target mobile bodies. The determination unit 124 transmits a notification that switching is made to the remote manual driving mode, together with information that specifies the mobile bodies 20 as the non-target mobile bodies, to the control value preparation unit 125. Upon receiving a notification that switching is made from the remote automated driving mode to the remote manual driving mode, the control value preparation unit 125 outputs a notification that switching is made to the remote manual driving mode to the display device 115. After that, the control value preparation unit 125 transmits a control instruction that matches driving operations by the operator to the mobile bodies 20 each time input is received from the operator input device 110. In this manner, remote control in the remote manual driving mode is performed for the mobile bodies 20 (non-target mobile bodies) for which it is determined that the first condition is not met.

When only one of the mobile bodies 20 is in an abnormal state, the determination unit 124 can take a handling method determined in advance, rather than the method discussed above, for the mobile body 20 in an abnormal state. Examples of the handling method determined in advance include the operator WO driving and collecting the mobile body 20.

As has been described above, the remote control device 120 can easily determine targets to be preferentially handled, among a plurality of mobile bodies that has been in an abnormal state, according to whether a first condition determined in advance is met. When a plurality of mobile bodies 20 traveling through automated driving is stopped because of a certain failure, it is necessary to handle the stopped vehicles with the available range of physical resources and human resources. With the configuration according to the present embodiment, it is easy to determine how the mobile bodies that have been in an abnormal state are to be handled in what order of priority. In addition, it is possible to immediately resume automated driving through remote control for mobile bodies specified as targets to be preferentially handled.

### B. Second Embodiment

### B1 Configuration of Remote Control System

A remote operation system 1 according to a second embodiment is used to move mobile bodies 20 through remote control in a factory that produces the mobile bodies 20, as in the first embodiment (see FIG. 1). The mobile body 20 includes components similar to those according to the first embodiment (see FIG. 2). The hardware configuration of the remote operation device 100 is similar to that according to the first embodiment (see FIG. 3). The operator input device 110 includes components similar to those according to the first embodiment (see FIGS. 3 and 4).

The remote control device 120 is a device that is used to remotely operate travel of the mobile body 20, as in the first embodiment. The respective functions of an acquisition unit 121, a calculation unit 122, an abnormality detection unit 123, a determination unit 124, and a control value preparation unit 125 are implemented by the CPU 11 of the remote control device 120 executing the programs stored in the memory 12. The functions of the acquisition unit 121, the calculation unit 122, the abnormality detection unit 123, and the control value preparation unit 125 illustrated in FIG. 3 are the same as those according to the first embodiment. In addition, the remote control device 120 controls travel of the mobile body 20 set to the remote automated driving mode, as in the first embodiment (see FIG. 5).

Components different from those according to the first embodiment will be mainly described below. Components similar to those according to the first embodiment will not be described. In the present embodiment, the determination unit 124 determines whether each mobile body 20 is a target to be preferentially handled when a plurality of mobile bodies 20 have been subjected to an abnormal stop. The mobile body 20 as the target is preferentially handled by starting driving in the remote manual driving mode. In the present embodiment, the target for which automated driving in the remote manual driving mode is preferentially started is referred to as a target mobile body. The determination unit 124 determines the mobile body 20 that meets a second condition determined in advance as the target mobile body. The second condition is a condition determined in relation to the degree of priority to start automated driving in the remote manual driving mode. The target mobile body, that is, the mobile body 20 for which it is determined to start automated driving in the remote manual driving mode, is remotely controlled after being switched to the remote manual driving mode. The second condition will be discussed in detail later.

On the other hand, the determination unit 124 determines the mobile body 20 that does not meet the second condition as a mobile body (hereinafter referred to as a non-target mobile body) for which automated driving in the remote manual driving mode is not preferentially started. For the non-target mobile body, switching is made from the remote automated driving mode to a different driving mode. For example, the mobile body 20 as the non-target mobile body is switched to the attended driving mode, and driven and collected by an operator WO.

The determination unit 124 transmits, for each of the mobile bodies 20 that have been subjected to an abnormal stop, a notification of switching of the driving mode according to a determination result as to whether the mobile body 20 is a target for which automated driving in the remote automated driving mode is to be started to the control value preparation unit 125.

### B2. Second Condition

At least one of the conditions listed below can be adopted as the second condition. Two or more of the conditions listed below may be selected as the second condition.

### Condition 2-1

The distance from the present position of the mobile body 20 to the location at which the downstream process is performed is equal to or less than a distance determined in advance.

### Condition 2-2

The distance from the present position of the mobile body 20 to the location at which the upstream process is performed is equal to or less than a distance determined in advance.

### Condition 2-3

The time since the present time until an expected shipping datetime set for the mobile body 20 is equal to or less than a time determined in advance.

### Condition 2-4

The model of the mobile body 20 corresponds to a model planned to be produced preferentially.

### Condition 2-5

The present position of the mobile body 20 is outdoors.

### Condition 2-6

The present position of the mobile body 20 is indoors.

### Condition 2-7

The mobile body 20 is able to provide the operator with visual information necessary for remote operations.

### Condition 2-8

The mobile body 20 is located on a path along which the operator has caused the mobile body 20 to travel based on remote operations.

### Condition 2-9

No object that hinders travel is present around the mobile body 20 when travel of the mobile body 20 is started based on remote operations by the operator.

### B3. Conditions Adoptable as Second Condition

The reasons for which Conditions 2-1 to 2-6 are provided, the methods of determining whether such conditions are met, and the effects obtained when such conditions are adopted are similar to those for Conditions 1-1 to 1-6 according to the first embodiment, and will not be described.

### Condition 2-7

When the operator located at a remote location remotely operates the mobile body 20, it is desirable that the mobile body 20 should be able to provide the remote control device 120 with the internal captured image information acquired by the in-vehicle camera. The operator is occasionally able to remotely operate the mobile body 20 using only the external captured image information acquired by the detection devices 50. However, the operator can drive the mobile body 20 more smoothly by remotely operating the mobile body 20 using the external captured image information acquired from the detection devices 50 and the internal captured image information acquired by the in-vehicle camera of the mobile body 20.

The remote control device 120 determines whether the mobile body 20 is able to provide the operator with visual information necessary for remote operations using the mobile body sensor information and the mobile body state information. For example, the remote control device 120 determines that the mobile body 20 is not able to provide the operator with visual information necessary for remote operations when the internal captured image information acquired by the in-vehicle camera has not been received for a certain period.

The remote control device 120 can easily determine the mobile body 20 that should be preferentially handled, among the mobile bodies 20 in an abnormal state, according to whether Condition 2-7 is met. When visual information necessary for remote operations is provided from the mobile body 20, in addition, the operator can remotely operate the mobile body 20 while checking the internal captured image information displayed on the display device 115. Hence, the operator can smoothly drive the mobile body 20 based on remote operations. In addition, the mobile body 20 can be moved immediately. Condition 2-8

It is considered that the mobile body 20 can be driven based on remote operations more easily when the mobile body 20 is caused to travel on a path along which the operator has caused the mobile body 20 to travel based on remote operations than when the mobile body 20 is caused to travel on a path along which the operator has not caused the mobile body 20 to travel.

The remote control device 120 determines the present position of the mobile body 20 using the mobile body sensor information and the mobile body state information and the external captured image information. Further, the remote control device 120 determines whether the mobile body 20 is located on a path along which the operator has caused the mobile body 20 to travel based on remote operations, using history information about remote operations by the operator. The history information about remote operations by the operator is stored in advance in the memory 12.

The remote control device 120 can easily determine the mobile body 20 that should be preferentially handled, among the mobile bodies 20 in an abnormal state, according to whether Condition 2-8 is met. When the mobile body 20 is located on a path along which the operator has caused the mobile body to travel based on remote operations, the operator can smoothly drive the mobile body 20 through remote control. In addition, the mobile body 20 can be moved immediately.

### Condition 2-9

The case where an object that hinders travel is present around the mobile body 20 includes a case where another mobile body 20 is subjected to an abnormal stop ahead of the mobile body 20, a case where an operator is doing some work ahead of the mobile body 20, etc. In such cases, it is necessary to avoid a collision with the object, and it is not desirable to start travel of the mobile body 20. Here, the object includes not only another mobile body 20, but also a person.

The remote control device 120 determines whether an object that hinders travel is present around the mobile body 20 using the mobile body sensor information and the mobile body state information and the external captured image information.

The remote control device 120 can easily determine the mobile body 20 that should be preferentially handled, among the mobile bodies 20 in an abnormal state, according to whether Condition 2-9 is met. When no object that hinders travel is present around the mobile body 20, the operator can smoothly drive the mobile body 20 based on remote operations. In addition, the mobile body 20 can be moved immediately.

### B4. Determination Process for Switching of Driving Mode

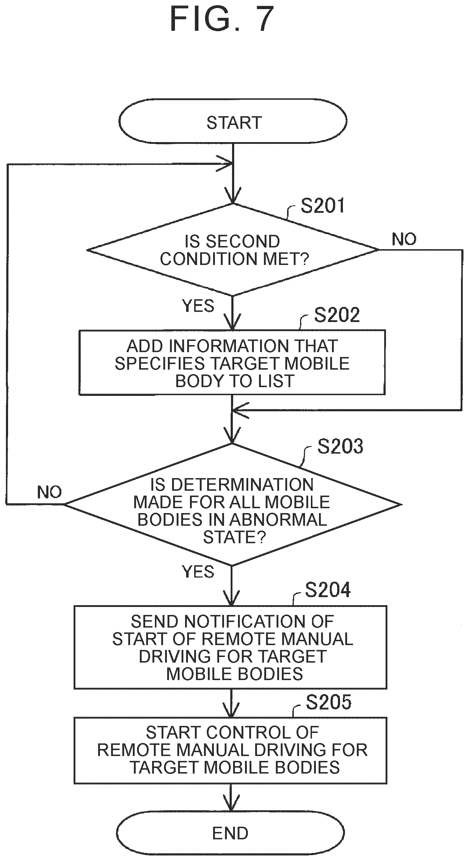

FIG. 7 is a flowchart illustrating a control method according to the present embodiment. The process illustrated in FIG. 7 is started when the abnormality detection unit 123 detects the occurrence of an abnormal state of two or more mobile bodies 20 based on mobile body sensor information and mobile body internal information on each of the mobile bodies 20 acquired by the acquisition unit 121 and the external captured image information. An example in which Condition 2-7 is adopted as the second condition will be described below. Here, an example in which N (N is an integer of two or more) mobile bodies 20 have been subjected to an abnormal stop is described.

In step S201, the determination unit 124 determines whether Condition 2-7 as the second condition is met for one of the N mobile bodies 20 that have been subjected to an abnormal stop. Specifically, the determination unit 124 determines whether the internal captured image information acquired by the in-vehicle camera has been successfully received. When it is determined that the second condition is met (step S201: YES) with the internal captured image information successfully received, the determination unit 124 executes the process in step S202.

When the internal captured image information acquired by the in-vehicle camera has not been received for a certain period, on the other hand, the determination unit 124 determines that the second condition is not met (step S201: NO), and executes the process in step S203.

In step S202, the determination unit 124 adds information that specifies the mobile body 20 for which it is determined in S201 that the second condition is met, that is, a target mobile body, to a list of target mobile bodies.

When a determination for the second condition is not made in step S203 for all the N mobile bodies 20 that have been in an abnormal state (step S203: NO), the determination unit 124 executes the process in step S201 again. When step S201 is executed again, the determination unit 124 executes the process in step S201 for one of the N mobile bodies 20 that have been in an abnormal state, for which a determination for the second condition has not been made.

When a determination for the second condition is made in step S203 for all the N mobile bodies 20 that have been in an abnormal state (step S203: YES), on the other hand, the determination unit 124 executes the process in step S204. When a determination for the second condition is finished for all the N mobile bodies 20 that have been in an abnormal state, the list of target mobile bodies includes information that specifies the mobile bodies 20 that meet the second condition, among the N mobile bodies 20 that have been in an abnormal state. When there is no mobile body 20 that meets the second condition, among the N mobile bodies 20 that have been in an abnormal state, however, the list of target mobile bodies is empty.

In step S204, the determination unit 124 outputs a notification that driving in the remote manual control mode is to be started, together with the list of target mobile bodies, to the control value preparation unit 125. For example, when one mobile body 20, of the N mobile bodies 20 that have been subjected to an abnormal stop, meets the second condition, the one mobile body that meets the second condition is switched to the remote manual control mode.

In step S205, the control value preparation unit 125 outputs a notification that switching is made to the remote manual driving mode to the display device 115. In addition, the control value preparation unit 125 transmits a control instruction to start driving in the remote manual control mode to the mobile bodies 20 as the target mobile bodies included in the list. When the list of target mobile bodies is empty, however, there are no mobile bodies 20 for which driving in the remote manual control mode is to be started, and therefore a control instruction to start driving in the remote manual control mode is not transmitted. Then, the process illustrated in FIG. 7 is ended.

After that, the control value preparation unit 125 transmits a control instruction that matches driving operations by the operator to the mobile bodies 20 each time input is received from the operator input device 110. In this manner, remote control for the mobile bodies 20 in the remote manual driving mode is performed.

The mobile bodies 20 (non-target mobile bodies) for which it is determined in step S201 that the second condition is not met are not targets to be preferentially handled. For example, the determination unit 124 performs the following processes after starting remote control for the mobile bodies 20 as the target mobile bodies through the process in step S205 in FIG. 7 discussed above. The determination unit 124 determines to switch to the attended driving mode for the non-target mobile bodies. The determination unit 124 sends a notification to instruct collection of the mobile bodies 20, together with information that specifies the mobile bodies 20 as the non-target mobile bodies, to at least one worker WO located in the site of the factory (see FIG. 1). The determination unit 124 sends a notification to workers WO via a terminal device T1 of the operators WO and a terminal device T2 installed at a stand-by location OF. The stand-by location OF is a location where the operators WO stand by or take a rest. In this manner, driving in the attended driving mode is performed for the mobile bodies 20 (non-target mobile bodies) for which it is determined that the second condition is not met.

As has been described above, the remote control device 120 can easily determine targets to be preferentially handled, among a plurality of mobile bodies that has been in an abnormal state, according to whether a second condition determined in advance is met. When a plurality of mobile bodies 20 traveling through automated driving is stopped because of a certain failure, it is necessary to handle the stopped vehicles with the available range of physical resources and human resources. With the configuration according to the present embodiment, it is easy to determine how the mobile bodies that have been in an abnormal state are to be handled in what order of priority. In addition, it is possible to immediately start driving based on remote operations by an operator for mobile bodies specified as targets to be preferentially handled.

### C. Third Embodiment

### C1. Configuration of Remote Control System

A remote operation system 1 according to a second embodiment is used to move mobile bodies 20 through remote control in a factory that produces the mobile bodies 20, as in the first embodiment (see FIG. 1). The mobile body 20 includes components similar to those according to the first embodiment (see FIG. 2). The hardware configuration of the remote operation device 100 is similar to that according to the first embodiment (see FIG. 3). The operator input device 110 includes components similar to those according to the first embodiment (see FIGS. 3 and 4).

The remote control device 120 is a device that is used to remotely operate travel of the mobile body 20, as in the first embodiment. The respective functions of an acquisition unit 121, a calculation unit 122, an abnormality detection unit 123, a determination unit 124, and a control value preparation unit 125 are implemented by the CPU 11 of the remote control device 120 executing the programs stored in the memory 12. The functions of the acquisition unit 121, the calculation unit 122, the abnormality detection unit 123, and the control value preparation unit 125 illustrated in FIG. 3 are the same as those according to the first embodiment. In addition, the remote control device 120 controls travel of the mobile body 20 set to the remote automated driving mode, as in the first embodiment (see FIG. 5).

Components different from those according to the first embodiment will be mainly described below. Components similar to those according to the first embodiment will not be described. In the present embodiment, the determination unit 124 determines whether each mobile body 20 is a target to be preferentially handled when a plurality of mobile bodies 20 is in an abnormal state. The mobile body 20 as the target is preferentially handled by the operator WO driving and collecting the mobile body 20 in the attended driving mode. In the present embodiment, the target to be preferentially driven and collected by the operator WO in the attended driving mode is referred to as a target mobile body. The determination unit 124 determines the mobile body 20 that meets a third condition determined in advance as the target mobile body. The third condition is a condition determined in relation to the degree of priority for the operator WO to collect the mobile body 20 in the attended driving mode. The target mobile body, that is, the mobile body 20 determined to be collected by the operator WO, is driven and collected by the operator WO after being switched to the attended driving mode. The third condition will be discussed in detail later.

On the other hand, the determination unit 124 determines the mobile body 20 that does not meet the third condition as a mobile body (hereinafter referred to as a non-target mobile body) not to be preferentially driven and collected by the operator in the attended driving mode. For the non-target mobile body, switching is made from the remote automated driving mode to a different driving mode. For example, the mobile body 20 as the non-target mobile body is switched to the remote manual driving mode to start being driven based on driving operations by the operator.

The determination unit 124 transmits, for each of the mobile bodies 20 that have been subjected to an abnormal stop, a notification of switching of the driving mode according to a determination result as to whether the mobile body 20 is a target to be driven and collected by the operator WO in the attended driving mode to the control value preparation unit 125.

### C2. Third Condition

At least one of the conditions listed below can be adopted as the third condition. Two or more of the conditions listed below may be selected as the third condition.

### Condition 3-1

The distance from the present position of the mobile body 20 to the location at which the downstream process is performed is equal to or less than a distance determined in advance.

### Condition 3-2

The distance from the present position of the mobile body 20 to the location at which the upstream process is performed is equal to or less than a distance determined in advance.

### Condition 3-3

The time since the present time until an expected shipping datetime set for the mobile body 20 is equal to or less than a time determined in advance.

### Condition 3-4

The model of the mobile body 20 corresponds to a model planned to be produced preferentially.

### Condition 3-5

The present position of the mobile body 20 is outdoors.

### Condition 3-6

The present position of the mobile body 20 is indoors.

### Condition 3-7

No object that hinders travel is present around the mobile body 20 when travel of the mobile body 20 is started based on driving by the operator on board the mobile body 20

### C3. Conditions Adoptable as Third Condition

The reasons for which Conditions 3-1 to 3-6 are provided, the methods of determining whether such conditions are met, and the effects obtained when such conditions are adopted are similar to those for Conditions 1-1 to 1-6 according to the first embodiment, and will not be described.

### Condition 3-7

Examples of the case where an object that hinders travel is present around the mobile body 20 include a case where another mobile body 20 is subjected to an abnormal stop ahead of the mobile body 20 and a case where an operator is doing some work ahead of the mobile body 20. In such cases, it is necessary to avoid a collision with the object, and it is not desirable to start travel of the mobile body 20. Here, the object includes not only another mobile body 20, but also a person.

The remote control device 120 determines whether an object that hinders travel is present around the mobile body 20 using the mobile body sensor information and the mobile body state information and the external captured image information.

The remote control device 120 can easily determine the mobile body 20 that should be preferentially handled, among the mobile bodies 20 in an abnormal state, according to whether Condition 3-7 is met. When no object that hinders travel is present around the mobile body 20, the operator can smoothly drive the mobile body 20. In addition, the mobile body 20 can be moved immediately.

### C4. Determination Process for Switching of Driving Mode

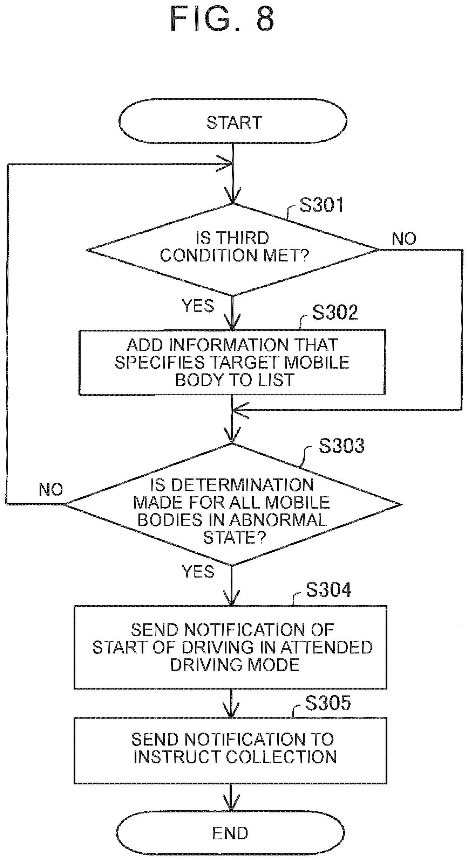

FIG. 8 is a flowchart illustrating a control method according to the present embodiment. The process illustrated in FIG. 8 is started when the abnormality detection unit 123 detects the occurrence of an abnormal state of two or more mobile bodies 20 based on mobile body sensor information and mobile body internal information on each of the mobile bodies 20 acquired by the acquisition unit 121 and the external captured image information. An example in which Condition 3-5 is adopted as the third condition will be described below. Here, an example in which N (N is an integer of two or more) mobile bodies 20 have been subjected to an abnormal stop is described.

In step S301, the determination unit 124 determines whether Condition 3-5 as the second condition is met for one of the N mobile bodies 20 that have been subjected to an abnormal stop. Specifically, the determination unit 124 determines the present position of the mobile body 20 using the mobile body sensor information and the mobile body state information and the external captured image information. Further, the determination unit 124 determines whether the mobile body 20 is presently positioned outdoors using factory map information. When it is determined that the third condition is met (step S301: YES) with the mobile body 20 presently positioned outdoors, the determination unit 124 executes the process in step S302.

When the mobile body 20 is presently positioned indoors, on the other hand, the determination unit 124 determines that the third condition is not met (step S301: NO), and executes the process in step S303.

In step S302, the determination unit 124 adds information that specifies the mobile body 20 for which it is determined in S301 that the first condition is met, that is, a target mobile body, to a list of target mobile bodies.

When a determination for the third condition is not made in step S303 for all the N mobile bodies 20 that have been in an abnormal state (step S303: NO), the determination unit 124 executes the process in step S301 again. When step S301 is executed again, the determination unit 124 executes the process in step S301 for one of the N mobile bodies 20 that have been in an abnormal state, for which a determination for the third condition has not been made.

When a determination for the third condition is made in step S303 for all the N mobile bodies 20 that have been in an abnormal state (step S303: YES), on the other hand, the determination unit 124 executes the process in step S304. When a determination for the third condition is finished for all the N mobile bodies 20 that have been in an abnormal state, the list of target mobile bodies includes information that specifies the mobile bodies 20 that meet the third condition, among the N mobile bodies 20 that have been in an abnormal state. When there is no mobile body 20 that meets the third condition, among the N mobile bodies 20 that have been in an abnormal state, however, the list of target mobile bodies is empty.

In step S304, the determination unit 124 outputs a notification that driving in the attended driving mode is to be started, together with the list of target mobile bodies, to the control value preparation unit 125. For example, when two mobile bodies 20, of the N mobile bodies 20 that have been subjected to an abnormal stop, meet the third condition, the two mobile bodies that meet the third condition are switched to the attended driving mode, to be driven and collected by the operator WO.

In step S305, the determination unit 124 sends a notification to instruct collection of the mobile bodies 20, together with information that specifies the mobile bodies 20 as the target mobile bodies, to at least one worker WO located in the site of the factory (see FIG. 1). The determination unit 124 sends a notification to workers WO via a terminal device T1 of the operators WO and a terminal device T2 installed at a stand-by location OF. The stand-by location OF is a location where the operators WO stand by or take a rest. Then, the process illustrated in FIG. 8 is ended.

After that, the operator WO moves to the positions at which the mobile bodies 20 as the target mobile bodies are stopped, and drives the mobile bodies 20. In this manner, the mobile bodies 20 as the target mobile bodies are collected.

The mobile bodies 20 (non-target mobile bodies) for which it is determined in step S301 that the third condition is not met are not targets to be preferentially handled. The following processes are performed after an instruction to collect the mobile bodies 20 as the target mobile bodies is given. The determination unit 124 determines to switch to the attended driving mode for the non-target mobile bodies. The determination unit 124 sends a notification to instruct collection of the mobile bodies 20, together with information that specifies the mobile bodies 20 as the non-target mobile bodies, to at least one worker WO located in the site of the factory (see FIG. 1). The determination unit 124 sends a notification to workers WO via a terminal device T1 of the operators WO and a terminal device T2 installed at a stand-by location OF. The stand-by location OF is a location where the operators WO stand by or take a rest. In this manner, driving in the attended driving mode is performed for the mobile bodies 20 (non-target mobile bodies) for which it is determined that the second condition is not met.

As has been described above, the remote control device 120 can easily determine targets to be preferentially handled, among a plurality of mobile bodies that has been in an abnormal state, according to whether a third condition determined in advance is met. When a plurality of mobile bodies 20 traveling through automated driving is stopped because of a certain failure, it is necessary to handle the stopped vehicles with the available range of physical resources and human resources. With the configuration according to the present embodiment, it is easy to determine how the mobile bodies that have been in an abnormal state are to be handled in what order of priority. In addition, it is possible to immediately start the work for the operator WO to drive and collect the mobile bodies 20 specified as targets to be preferentially handled.

### D. Fourth Embodiment

The mobile body 20 is described as traveling in one of the attended driving mode, the remote manual driving mode, and the remote automated driving mode in relation to the first to third embodiments. The mobile body 20 may be able to travel in an autonomous driving mode, in addition to these driving modes. The autonomous driving mode is a driving mode in which travel of the mobile body 20 is controlled through autonomous control by the mobile body 20. Driving of the mobile body 20 in the autonomous driving mode is automated driving.

A remote operation system 1 according to a fourth embodiment is used to move mobile bodies 20 through remote control in a factory that produces the mobile bodies 20, as in the first embodiment (see FIG. 1). The hardware configuration of the remote operation device 100 is similar to that according to the first embodiment (see FIG. 3). The operator input device 110 includes components similar to those according to the first embodiment (see FIGS. 3 and 4).

The remote control device 120 is a device that is used to remotely operate travel of the mobile body 20 set to the remote automated driving mode, as in the first embodiment. The respective functions of an acquisition unit 121, a calculation unit 122, an abnormality detection unit 123, a determination unit 124, and a control value preparation unit 125 are implemented by the CPU 11 of the remote control device 120 executing the programs stored in the memory 12. The functions of the acquisition unit 121, the calculation unit 122, the abnormality detection unit 123, and the control value preparation unit 125 illustrated in FIG. 3 are the same as those according to the first embodiment. In addition, the remote control device 120 controls travel of the mobile body 20 set to the remote automated driving mode, as in the first embodiment (see FIG. 5).

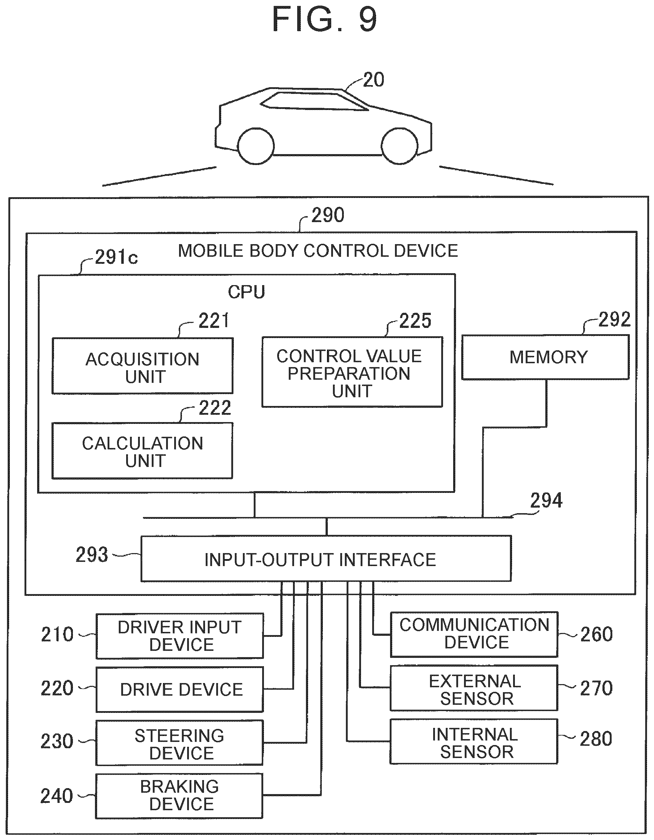

FIG. 9 is a block diagram illustrating the functional configuration of a mobile body 20 that can travel in an autonomous driving mode. The present embodiment is different from the first embodiment (see FIG. 2) in that a mobile body control device 290c provided in the mobile body 20 includes the function as a control device. Components different from those according to the first embodiment will be mainly described below. Components similar to those according to the first embodiment will not be described.

The memory 292 stores a program for implementing the functions of the acquisition unit 121, the calculation unit 122, and the control value preparation unit 125 provided in the remote control device 120, in addition to the function of the CPU 291 indicated in the first embodiment. A CPU 291c functions as an acquisition unit 221, a calculation unit 222, and a control value preparation unit 225, corresponding to such functions provided in the remote control device 120 according to the first embodiment, by executing the program stored in the memory 292. The memory 292 also stores information on a planned route for the mobile body 20. The planned route is represented by a node that indicates a departure location, nodes that indicate pass points, a node that indicates a destination location, and links that connect between the nodes.

The acquisition unit 221 acquires the mobile body sensor information and the mobile body state information. The acquisition unit 221 also acquires the external captured image information from the detection devices 50.

The calculation unit 222 calculates the position and the orientation of the mobile body 20. For example, the position and the orientation of the mobile body 20 may be estimated using the external captured image information. The position of the mobile body 20 can be acquired by calculating the coordinates of measurement points of the mobile body 20 in an image coordinate system using the outer shape of the mobile body 20 detected from the external captured image information, and converting the calculated coordinates into coordinates in the global coordinate system, for example.

The orientation of the mobile body 20 can be estimated based on the orientation of a vector related to motion of the mobile body 20 calculated using an optical flow method, for example. Alternatively, the orientation of the mobile body 20 may be calculated using a detected value from the yaw rate sensor mounted on the mobile body 20. The outer shape of the mobile body 20 can be detected by inputting the captured image to a detection model that makes use of artificial intelligence, for example.

The control value preparation unit 225 determines the acceleration and the steering angle of the mobile body 20 using the position and the orientation of the mobile body 20 calculated by the calculation unit 222, and causes the mobile body 20 to travel at the determined acceleration and steering angle.

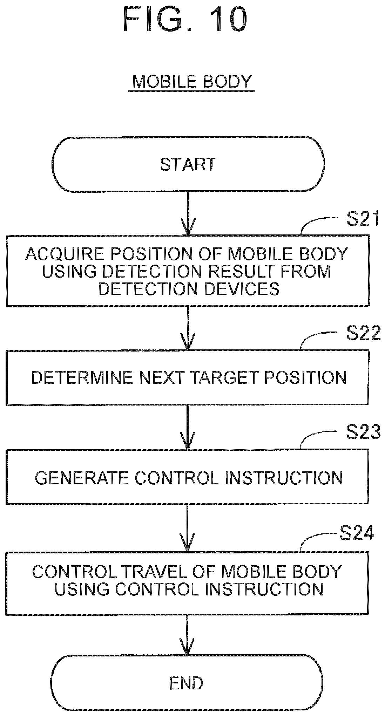

FIG. 10 is a flowchart illustrating a method of driving the mobile body 20 set to the autonomous driving mode. The calculation unit 222 acquires the position of the mobile body 20 using the detection result from the detection devices 50 (step S21). Specifically, the calculation unit 222 calculates the position of the mobile body 20 using the external captured image information acquired by the acquisition unit 221 from the detection devices 50. The information on the position of the mobile body 20 includes X, Y, and Z coordinates in the global coordinate system of the factory.

The control value preparation unit 225 determines a target position for which the mobile body 20 should be bound next (step S22). In the present embodiment, the target position is represented by X, Y, and Z coordinates in the global coordinate system of the factory. The control value preparation unit 225 determines the target position for which the mobile body 20 should be bound next using information on the position of the mobile body 20 calculated by the calculation unit 222 and the planned route. The control value preparation unit 225 determines the target position on the planned route further ahead of the present location of the mobile body 20.

The control value preparation unit 225 generates a control instruction for causing the mobile body 20 to travel toward the determined target position (step S23). In the present embodiment, the control instruction includes the acceleration and the steering angle of the mobile body 20 as parameters. The control value preparation unit 225 calculates a travel speed of the mobile body 20 from transitions in position of the mobile body 20, and makes a comparison between the calculated travel speed and a target speed for the mobile body 20 determined in advance. The control value preparation unit 225 determines the acceleration such that the mobile body 20 accelerates when the travel speed is lower than the target speed, and determines the acceleration such that the mobile body 20 decelerates when the travel speed is higher than the target speed. The control value preparation unit 225 determines the steering angle such that the mobile body 20 does not deviate from the planned route when the mobile body 20 is positioned on the planned route, and determines the steering angle such that the mobile body 20 returns to the planned route when the mobile body 20 is not positioned on the planned route, or in other words when the mobile body 20 has deviated from the planned route.

The control value preparation unit 225 causes the mobile body 20 to travel by controlling the drive device 220, the steering device 230, and the braking device 240 at the acceleration and the steering angle represented by the generated control instruction (step S24). The control value preparation unit 225 acquires the position of the mobile body 20, determines a target position, generates a control instruction, and controls travel repeatedly in cycles determined in advance.

The mobile body 20 can travel without being controlled by the remote control device 120, since the mobile body 20 travels through autonomous control.

The abnormality detection unit 123 of the remote control device 120 detects the occurrence of an abnormal state about the mobile body 20, as in the first embodiment. In the present embodiment, the abnormality detection unit 123 detects the occurrence of an abnormal state about the mobile body 20 using the mobile body sensor information and the mobile body state information on the mobile body 20, the external captured image information, information that indicates the status of communication between the remote operation device 100 and the mobile body 20, etc. when the mobile body 20 set to the remote automated driving mode or the autonomous driving mode is traveling. The abnormal state about the mobile body 20 refers to a state in which the mobile body 20 set to the remote automated driving mode or the autonomous driving mode has been subjected to an abnormal stop. The abnormal stop refers to an unintended stop of the mobile body 20 traveling in the remote automated driving mode or the autonomous driving mode.

The determination unit 124 determines whether to resume automated driving in the remote automated driving mode or the autonomous driving mode when the mobile body 20 set to the remote automated driving mode or the autonomous driving mode is subjected to an abnormal stop. The determination method is the same as that according to the first embodiment (see FIG. 6).

When the mobile body 20 set to the remote automated driving mode or the autonomous driving mode is subjected to an abnormal stop, one of the following measures is taken. The measures to be taken include (1) switched the mobile body 20 to the remote manual driving mode and remotely operating driving of the mobile body 20 based on driving operations by the operator, (ii) resuming automated driving in the remote automated driving mode or the autonomous driving mode, and (iii) the operator getting on board the mobile body 20 and driving the mobile body 20.

Specifically, the determination unit 124 determines the mobile body 20 that meets the first condition as the target mobile body. The details of the first condition are the same as those according to the first embodiment. The target mobile body, that is, the mobile body 20 for which it is determined to resume automated driving in the remote automated driving mode or the autonomous driving mode, is subjected to control for resuming automated driving while being kept in the remote automated driving mode. When it is determined to resume automated driving of the mobile body 20 in the remote automated driving mode or the autonomous driving mode, the driving mode is not switched.

On the other hand, the determination unit 124 determines the mobile body 20 that does not meet the first condition as a mobile body (non-target mobile body) for which automated driving in the remote automated driving mode is not preferentially resumed. For the non-target mobile body, switching is made from the remote automated driving mode or the autonomous driving mode to a different driving mode. For example, the mobile body 20 as the non-target mobile body is switched to the remote manual driving mode to travel based on remote operations by the operator. Alternatively, the mobile body 20 as the non-target mobile body is switched to the attended driving mode, and driven and collected by an operator WO.

The determination unit 124 transmits, for each of the mobile bodies 20 that have been subjected to an abnormal stop, a notification of switching of the driving mode according to a determination result as to whether automated driving in the remote automated driving mode or the autonomous driving mode is to be resumed to the control value preparation unit 125.

The control value preparation unit 125 performs control for resuming automated driving of the mobile body 20 in the site of the factory while being kept in the remote automated driving mode or the autonomous driving mode upon receiving from the determination unit 124 a notification that switching of the driving mode is not made. On the other hand, the control value preparation unit 125 performs control so as to switch the mobile body 20 from the remote automated driving mode to the remote manual driving mode upon receiving from the determination unit 124 a notification that switching is made to the remote manual driving mode. As a result, automated driving of the mobile body 20 in the remote manual driving mode is started.

As has been described above, the remote control device 120 can easily determine targets to be preferentially handled, among a plurality of mobile bodies that has been in an abnormal state, according to whether a first condition determined in advance is met.

### E. Other Embodiments

(E1) In the above fourth embodiment, when the mobile body 20 set to the remote automated driving mode or the autonomous driving mode is subjected to an abnormal stop, it is determined whether to resume automated driving in the remote automated driving mode or the autonomous driving mode, or to switch from the remote automated driving mode or the autonomous driving mode to another driving mode.

Alternatively, when the mobile body 20 set to the remote automated driving mode or the autonomous driving mode is subjected to an abnormal stop, the determination unit 124 may determine whether each mobile body 20 is a target for which driving in the remote manual driving mode is preferentially started, as in the second embodiment. The determination method is the same as that according to the second embodiment (see FIG. 7).

Specifically, the determination unit 124 determines the mobile body 20 that meets the second condition as the target mobile body. The details of the second condition are the same as those according to the second embodiment. The target mobile body, that is, the mobile body 20 for which it is determined to start driving in the remote manual driving mode, is remotely controlled after being switched to the remote manual driving mode.

On the other hand, the determination unit 124 determines the mobile body 20 that does not meet the second condition as a mobile body (non-target mobile body) for which automated driving in the remote manual driving mode is not preferentially started. For the non-target mobile body, switching is made from the remote automated driving mode to a different driving mode. For example, the mobile body 20 as the non-target mobile body is switched to the attended driving mode, and driven and collected by an operator WO.

The determination unit 124 transmits, for each of the mobile bodies 20 that have been subjected to an abnormal stop, a notification of switching of the driving mode according to a determination result as to whether driving in the remote manual driving mode is to be started to the control value preparation unit 125.

The control value preparation unit 125 performs control so as to switch the mobile body 20 from the remote automated driving mode to the remote manual driving mode upon receiving from the determination unit 124 a notification that switching is made to the remote manual driving mode. As a result, driving of the mobile body 20 in the remote manual driving mode is started.

As has been described above, the remote control device 120 can easily determine targets to be preferentially handled, among a plurality of mobile bodies that has been in an abnormal state, according to whether a second condition determined in advance is met.

(E2) In the above fourth embodiment, when the mobile body 20 set to the remote automated driving mode or the autonomous driving mode is subjected to an abnormal stop, it is determined whether to resume automated driving in the remote automated driving mode or the autonomous driving mode, or to switch from the remote automated driving mode or the autonomous driving mode to another driving mode.

Alternatively, when the mobile body 20 set to the remote automated driving mode or the autonomous driving mode is subjected to an abnormal stop, the determination unit 124 may determine whether each mobile body 20 is a target to be preferentially driven and collected by the operator WO in the attended driving mode, as in the third embodiment. The determination process as to switching of the driving mode is the same as that according to the third embodiment (see FIG. 8).

Specifically, the determination unit 124 determines the mobile body 20 that meets the third condition as the target mobile body. The details of the third condition are the same as those according to the third embodiment. The target mobile body, that is, the mobile body 20 determined to be collected by the operator WO, is driven and collected by the operator WO after being switched to the attended driving mode.

On the other hand, the determination unit 124 determines the mobile body 20 that does not meet the third condition as a mobile body (non-target mobile body) not to be preferentially driven and collected by the operator in the attended driving mode. For the non-target mobile body, switching is made from the remote automated driving mode to a different driving mode. For example, the mobile body 20 as the non-target mobile body is switched to the remote manual driving mode to start being driven based on driving operations by the operator.

The determination unit 124 transmits, for each of the mobile bodies 20 that have been subjected to an abnormal stop, a notification of switching of the driving mode according to a determination result as to whether the mobile body 20 is a target to be driven and collected by the operator WO in the attended driving mode to the control value preparation unit 125. Further, the determination unit 124 sends a notification to instruct collection of the mobile bodies 20, together with information that specifies the mobile bodies 20 as the target mobile bodies, to the operator WO.

As has been described above, also in the present embodiment, the remote control device 120 can easily determine targets to be preferentially handled, among a plurality of mobile bodies that has been in an abnormal state, according to whether a third condition determined in advance is met.

(E3) In the above fourth embodiment and the other embodiments (E1) and (E2), when the mobile body 20 travels in the autonomous driving mode, a detection result output from the internal sensor 280 of the mobile body 20 may be used in at least one of the generation of a path and the generation of a travel control signal. For example, the mobile body 20 may acquire a detection result from the internal sensor 280 and reflect the detection result from the internal sensor 280 in a path when generating a path. The mobile body 20 may acquire a detection result from the internal sensor 280 and reflect the detection result from the internal sensor 280 in a control instruction when generating a control instruction.

(E4) In the first to fourth embodiments etc., the abnormality detection unit 123 detects the occurrence of an abnormal state of the mobile body 20 when a plurality of mobile bodies 20 set to the remote automated driving mode is traveling. Alternatively, the abnormality detection unit 123 may detect the occurrence of an abnormal state of the mobile body 20 traveling in the remote automated driving mode or traveling through autonomous control. The determination unit 124 can determine the mobile body 20 that should be preferentially handled, among the mobile bodies 20 in an abnormal state. Also in this case, it is possible to easily determine a target to be preferentially handled, among a plurality of mobile bodies in an abnormal state, and take necessary measures on the specified mobile body, as in the first to fourth embodiments.

(E5) The mobile body 20 may be able to travel in two or three driving modes, among the attended driving mode, the remote manual driving mode, the remote automated driving mode, and the autonomous driving mode.

(E6) When the mobile body 20 can travel in one of the attended driving mode, the remote manual driving mode, and the remote automated driving mode and further can travel through autonomous control, the remote control device 120 may perform the following control.

When the target mobile body is a mobile body in which an abnormal state is caused while being driven in the autonomous driving mode, the remote control device 120 performs control so as to start automated driving in a remote control mode for the target mobile body. When the target mobile body is a mobile body 20 in which an abnormal state is caused while being subjected to automated driving through remote control, the remote control device 120 performs control so as to start driving in the autonomous driving mode for the target mobile body. The target mobile body is specified based on Condition 1 described in relation to the first embodiment.

When an abnormal state is caused in the mobile body 20 being subjected to automated driving performed autonomously or through remote control, it is assumed that it is often difficult to resume driving in the same driving mode. Therefore, in another embodiment 2, switching is made to a driving mode different from the driving mode set when an abnormal state is caused. Consequently, it is possible to immediately start automated driving of the mobile body 20 performed autonomously or through remote control.

(E7) In the first to fourth embodiments etc., the target mobile bodies and the non-target mobile bodies are handled differently. However, the target mobile bodies and the non-target mobile bodies may be handled in the same manner. In this case, first, the target mobile bodies are preferentially handled. After handling of all the target mobile bodies is completed, handling of the non-target mobile bodies is started.

(E8) In the first to fourth embodiments, the mobile bodies 20 set to the remote automated driving mode are subjected to an abnormal stop as an example of the abnormal state of the mobile bodies 20. However, the abnormal state of the mobile bodies 20 is not limited to an abnormal stop of the mobile bodies 20. For example, the occurrence of a failure in a communication line between the remote control device 120 and the mobile body 20 or the occurrence of a failure in the remote operation device 100 itself may be determined as the occurrence of the abnormal state.

(E9) In the first embodiment, the remote control device 120 executes processes from acquiring position information on the mobile body 20 to generating a control instruction. On the contrary, the mobile body 20 may execute at least a part of the processes from acquiring position information on the mobile body 20 to generating a control instruction. For example, the following aspects (1) to (3) may be used.
(1) The remote control device 120 may acquire position information on the mobile body 20, determine a target position for which the mobile body 20 should be bound next, and generate a path from a present location of the mobile body 20 represented by the acquired position information to the target position. The remote control device 120 may generate a path to the target position between the present location and a destination location, or may generate a path to the destination location. The remote control device 120 may transmit the generated path to the mobile body 20. The mobile body 20 may generate a control instruction such that the mobile body 20 travels on the path received from the remote control device 120, and control the drive device 220, the steering device 230, and the braking device 240 using the generated control instruction.
(2) The remote control device 120 may acquire position information on the mobile body 20, and transmit the acquired position information to the mobile body 20. The mobile body 20 may determine a target position for which the mobile body 20 should be bound next, generate a path from a present location of the mobile body 20 represented by the received position information to the target position, generate a travel control signal such that the mobile body 20 travels on the generated path, and control the drive device 220, the steering device 230, and the braking device 240 using the generated travel control signal.
(3) In the above aspects (1) and (2), a detection result output from at least one of the external sensor 270 and the internal sensor 280 mounted on the mobile body 20 may be used in at least one of the generation of a path and the generation of a control instruction. For example, in the above aspect (1), the remote control device 120 may acquire a detection result from at least one of the external sensor 270 or the internal sensor 280 and reflect the detection result in a path when generating a path. In the above aspect (1), the mobile body 20 may acquire a detection result from at least one of the external sensor 270 or the internal sensor 280 and reflect the detection result in a control instruction when generating a control instruction. In the above aspect (2), the mobile body 20 may acquire a detection result from at least one of the external sensor 270 or the internal sensor 280 and reflect the detection result in a path when generating a path. In the above aspect (2), the mobile body 20 may acquire a detection result from at least one of the external sensor 270 or the internal sensor 280 and reflect the detection result in a control instruction when generating a control instruction.

(E10) In the first to fourth embodiments, the mobile body 20 is a battery electric vehicle. However, the mobile body 20 is not limited to a battery electric vehicle. The term "mobile body" means an object that is movable, and may be a vehicle or an electric vertical take-off and landing aircraft (a so-called flying vehicle), for example. The vehicle may be a vehicle that travels using wheels, such as a passenger vehicle, a truck, a bus, a two-wheeled vehicle, and a four-wheeled vehicle. Alternatively, the vehicle may be a vehicle that travels using an endless track, such as a tank and a construction vehicle. The vehicle includes a battery electric vehicle, a gasoline vehicle, a hybrid electric vehicle, and a fuel cell electric vehicle. When the mobile body 20 is not a vehicle, the expressions "vehicle" and "car" as used herein may be replaced with "mobile body" as appropriate, and the expression "travel" may be replaced with "move" as appropriate.

(E11) In the first embodiment etc., the mobile body 20 adopts a steer-by-wire system, a throttle-by-wire system, and a brake-by-wire system. However, the steering wheel and the wheels may be connected to each other through a mechanical structure in the mobile body 20. The accelerator pedal and a throttle valve may be connected to each other through a mechanical structure in the mobile body 20. The brake pedal and a brake caliper may be connected to each other through a mechanical structure in the mobile body 20.

(E12) In the embodiments discussed above, the remote control device 120 is used to remotely operate the mobile body 20 in the remote automated driving mode and the remote manual driving mode. Alternatively, a remote automated driving device that is used to remotely operate the mobile body 20 in the remote automated driving mode and a remote manual driving device that is used to remotely operate the mobile body 20 in the remote manual driving mode may be prepared separately. In this case, another device different from the remote automated driving device and the remote manual driving device may determine switching of the driving mode. Alternatively, one of the remote automated driving device and the remote manual driving device may determine switching of the driving mode.

(E13) In the first embodiment etc. discussed above, the calculation unit 122 calculates the position and the orientation of the mobile body 20 using the external captured image information. Alternatively, the calculation unit 122 may calculate the position and the orientation of the mobile body using information acquired by a sensor of a different type from the external cameras as the detection devices 50. The calculation unit 122 may calculate the position and the orientation of the mobile body using three-dimensional point cloud information acquired by an external lidar, for example. The external lidar is a lidar provided at a different location from the mobile body 20. The external lidar includes the mobile body 20 as a calculation target in the detection range.

In this case, the calculation unit 122 calculates the position and the orientation of the mobile body 20 through matching between measured point cloud data and reference point cloud data, for example. The measured point cloud data are three-dimensional point cloud data acquired by the external lidar detecting the mobile body 20 as the calculation target. The reference point cloud data are reference data to be used as a template in matching with the measured point cloud data. The reference point cloud data are virtual three-dimensional point cloud data generated based on three-dimensional computer-aided design (CAD) data that represent the outer shape of the mobile body 20, for example. One of iterative closest point (ICP) and normal distributions transform (NDT), for example, is used as an algorithm for the matching by the calculation unit 122. The calculation unit 122 may calculate the position and the orientation of the mobile body using measured point cloud data acquired by an in-vehicle lidar mounted on another mobile body different from the mobile body 20 as the calculation target detecting the mobile body 20 as the calculation target.

(E14) The function of the remote control device 120 is not limited to being implemented by software, and may be partially or wholly implemented by dedicated hardware. For example, a circuit represented by a field programmable gate array (FPGA) or an application specific integrated circuit (ASIC) may be used as the dedicated hardware.

(E15) In each of the above embodiments, it is only necessary that the mobile body 20 should include components that enable movement through automated driving, and the mobile body 20 may be in the form of a platform that includes the following components, for example. Specifically, it is only necessary that the mobile body 20 should include at least a mobile body control device, a drive device, a steering device, and a braking device in order to implement three functions including "traveling", "turning", and "stopping" through automated driving. In order for the mobile body 20 to acquire information from the outside for automated driving, it is only necessary that the mobile body 20 should further include a communication device. That is, at least a part of interior parts such as a driver's seat or a dashboard may not be mounted to the mobile body 20 that is movable through automated driving, at least a part of exterior parts such as a bumper or a fender may not be mounted to the mobile body 20, or a body shell may not be mounted to the mobile body 20. In this case, the remaining parts such as a body shell may be mounted to the mobile body 20 before the mobile body 20 is shipped from the factory, or the remaining parts such as a body shell may be mounted to the mobile body 20 after the mobile body 20 is shipped from the factory without the remaining parts such as a body shell mounted to the mobile body 20. The parts may be mounted to the mobile body 20 from any direction, including the upper side, the lower side, the front side, the rear side, the right side, and the left side, and may be mounted from the same direction or from different directions. Also when the mobile body 20 is in the form of a platform, a position is determined as with the mobile body 20 according to the first embodiment.

(E16) The mobile body 20 may be manufactured by any manufacturing method. For example, the mobile body 20 may be manufactured by combining a plurality of modules. The modules each mean a unit constituted of a plurality of parts grouped according to the area or the function in the mobile body 20. For example, the platform of the mobile body 20 may be manufactured by combining a front module that constitutes a front part of the platform, a center module that constitutes a center part of the platform, and a rear module that constitutes a rear part of the platform. The number of modules that constitute the platform is not limited to three, and may be two or less or four or more. The modules may include a part that constitutes a portion of the mobile body 20 that is different from the platform, in addition to or in place of the parts that constitute the platform. The various modules may include any exterior part such as a bumper or a grille, or any interior part such as a seat or a console. Not only the mobile body 20 but also mobile bodies in any aspect may be manufactured by combining a plurality of modules. Such modules may be manufactured by joining a plurality of parts by welding, using a fixture, etc., or may be manufactured by integrally molding at least a part of parts that constitute a module as a single part by casting, for example. The method of integrally molding a single part, in particular a relatively large part, is called gigacasting or megacasting. For example, the front module, the center module, and the rear module described above may be manufactured by gigacasting.

(E17) Conveying the mobile body using travel of the mobile body through automated driving is called "self-propelled conveyance". The configuration for implementing the self-propelled conveyance is called a "vehicle remote control autonomous travel conveyance system". The method of producing the mobile body using the self-propelled conveyance is called "self-propelled production". In the self-propelled production, at least a part of conveyance of the mobile body is implemented through self-propelled conveyance in a factory that manufactures the mobile body, for example.

The present disclosure is not limited to the above embodiments, and can be implemented by a variety of configurations without departing from the spirit of the present disclosure. For example, the technical features in the embodiments corresponding to the technical features in the aspects described in "SUMMARY OF THE INVENTION" can be replaced or combined, as appropriate, in order to address the above issue or achieve some or all of the above effects. When the technical features are not described as essential herein, such technical features can be omitted as appropriate.

## Claims

1. A control device (120) that controls operation of a mobile body (20), comprising a processor (11), wherein the processor (11) is configured to:
specify, in a case where an abnormal state occurs in a plurality of mobile bodies (20) that are performing automated driving autonomously or through remote control, at least one mobile body (20) to be preferentially handled as a target mobile body, from among the plurality of mobile bodies (20), based on a state of the plurality of mobile bodies (20); and
perform control of taking necessary measures on the target mobile body.

2. The control device (120) according to claim 1, wherein:
the automated driving performed through the remote control includes automated driving in which the plurality of mobile bodies (20) travel by receiving a travel condition generated by the control device (120), not based on remote operations by an operator located at a remote location; and
the processor (11) is configured to
specify at least one mobile body (20) that preferentially performs the automated driving autonomously or through the remote control as the target mobile body, from among the plurality of mobile bodies (20) detected as being in the abnormal state, and
perform control to cause the target mobile body to perform the automated driving autonomously or through the remote control.

3. The control device (120) according to claim 1, wherein:
the automated driving performed through the remote control includes
automated driving in which the plurality of mobile bodies (20) travels based on remote operations performed by an operator using an operator input device (110) provided at a different location from the mobile body (20), and
automated driving in which the plurality of mobile bodies (20) travels by receiving a travel condition generated by the control device (120), not based on the remote operations by the operator; and
the processor (11) is configured to
specify at least one mobile body (20) for which the automated driving based on the remote operations by the operator is to be preferentially started as the target mobile body, from among the plurality of mobile bodies (20) detected as being in the abnormal state, and
perform control of starting the automated driving based on the remote operations by the operator for the target mobile body.

4. The control device (120) according to claim 1, wherein the processor (11) is configured to:
specify at least one mobile body (20) to be preferentially collected by driving of an operator on board as the target mobile body, from among the plurality of mobile bodies (20) detected as being in the abnormal state; and
notify the operator of instruction of collecting the target mobile body, together with information necessary for collecting.

5. The control device (120) according to any one of claims 2 to 4, wherein the target mobile body includes a mobile body (20), for which a distance from a present position to a location at which a downstream process is performed is equal to or less than a distance determined in advance.

6. The control device (120) according to any one of claims 2 to 4, wherein the target mobile body includes a mobile body (20), for which a distance from a present position to a location at which an upstream process is performed is equal to or less than a distance determined in advance.

7. The control device (120) according to any one of claims 2 to 4, wherein the target mobile body includes the mobile body (20), for which a time since a present time until a set expected shipping datetime is equal to or less than a time determined in advance.

8. The control device (120) according to claim 2, wherein the target mobile body includes a mobile body (20), for which no stationary object is present on an expected travel route.

9. The control device (120) according to any one of claims 2 to 4, wherein the target mobile body includes a mobile body (20) of a model planned to be preferentially produced.

10. The control device (120) according to any one of claims 2 to 4, wherein the target mobile body includes a mobile body (20) presently positioned outdoors.

11. The control device (120) according to any one of claims 2 to 4, wherein the target mobile body includes a mobile body (20) presently positioned indoors.

12. The control device (120) according to claim 2, wherein the processor (11) is configured to:
perform control of starting the automated driving performed through the remote control for the target mobile body in a case where the target mobile body is a mobile body (20) brought into the abnormal state while performing the autonomous driving; and
perform control of starting the autonomous driving for the target mobile body in a case where the target mobile body is a mobile body (20) brought into the abnormal state while performing the automated driving through the remote control.

13. The control device (120) according to claim 3, wherein the target mobile body includes a mobile body (20) capable of providing visual information to be used for the operator located at a remote location to remotely operate the mobile body (20).

14. A method by which a computer controls a mobile body (20) performing automated driving autonomously or through remote control not based on remote operations by an operator located at a remote location, the method comprising:
specifying, in a case where an abnormal state occurs in a plurality of mobile bodies (20) that are performing the automated driving autonomously or through the remote control, at least one mobile body (20) to preferentially perform the automated driving autonomously or through the remote control as a target mobile body, from among the plurality of mobile bodies (20); and
performing control to cause the target mobile body to perform the automated driving autonomously or through the remote control.

15. A method by which a computer controls a mobile body (20) performing automated driving autonomously or through remote control not based on remote operations by an operator located at a remote location, the method comprising:
specify, in a case where an abnormal state occurs in a plurality of mobile bodies (20) being performing the automated driving autonomously or through the remote control, at least one mobile body (20) for which the automated driving based on the remote operations by the operator is to be preferentially started as a target mobile body, from among the plurality of mobile bodies (20); and
performing control of starting the automated driving based on the remote operations by the operator for the target mobile body.
